(19) Europäisches Patentamt
European Patent Office
Office européen des brevets

(11) Publication number : **0 366 369 B1**

# (12) EUROPEAN PATENT SPECIFICATION

(45) Date of publication of patent specification : **13.12.95 Bulletin 95/50**

(51) Int. Cl.$^6$ : **G11B 11/10**

(21) Application number : **89310816.7**

(22) Date of filing : **20.10.89**

## (54) Magnetooptical recording media

(30) Priority : **20.10.88 JP 264898/88**
**01.11.88 JP 276738/88**

(43) Date of publication of application : **02.05.90 Bulletin 90/18**

(45) Publication of the grant of the patent : **13.12.95 Bulletin 95/50**

(84) Designated Contracting States : **AT BE CH DE ES FR GB GR IT LI LU NL SE**

(56) References cited :
**EP-A- 0 320 286**
**PATENT ABSTRACTS OF JAPAN, vol. 10, no. 310 (E-379), 22nd October 1986; & JP-A-61 120 816**
**PATENT ABSTRACTS OF JAPAN, vol. 11, no. 207 (P-563), 4th April 1987; & JP-A-61 255 546**

(73) Proprietor : **MITSUI PETROCHEMICAL INDUSTRIES, LTD.**
**2-5, Kasumigaseki 3-chome**
**Chiyoda-ku**
**Tokyo 100 (JP)**

(72) Inventor : **Mizumoto, Kunihiko, c/o Mitsui Petrochemical Industries Ltd.,**
**3 Chigusa-Kaigan**
**Ichihara-shi, Chiba (JP)**
Inventor : **Hashimoto, Hidehiko, c/o Mitsui Petrochemical Industries Ltd.,**
**3 Chigusa-Kaigan**
**Ichihara-shi, Chiba (JP)**
Inventor : **Kurisu, Masayoshi, c/o Mitsui Petrochemical Industries Ltd.,**
**3 Chigusa-Kaigan**
**Ichihara-shi, Chiba (JP)**
Inventor : **Todo, Akira, c/o Mitsui Petrochemical Industries Ltd.,**
**3 Chigusa-Kaigan**
**Ichihara-shi, Chiba (JP)**

(74) Representative : **Cresswell, Thomas Anthony et al**
**J.A. KEMP & CO.**
**14 South Square**
**Gray's Inn**
**London WC1R 5LX (GB)**

EP 0 366 369 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to magnetooptical recording media having excellent adhesion between a substrate and an enhancement film, oxidation resistance and magnetooptical recording characteristics.

It is known that magnetooptical recording films comprising transition metals such as iron and cobalt and rare earth elements such as terbium (Tb) and gadolinium (Gd) have an easy axis of magnetization perpendicular to the film and are capable of forming a small inverse magnetic domain with magnetization anti-parallel to the magnetization of the film. By regarding the existence or nonexistence of the inverse magnetic domain as "1" or "0", it is possible to record a digital signal on such magnetooptical recording films.

As magnetooptical recording films composed of such transition metals and rare earth elements as mentioned above, those of a Tb-Fe system containing from 15 to 30 atom% of Tb, for example, are disclosed in Japanese Publication No. 20691/1982. Magnetooptical recording films of the Tb-Fe system may have a third component metal added. Furthermore, magnetooptical recording films of the Tb-Co system and Tb-Fe-Co system are known.

Though these magnetooptical recording films have excellent record reproducing characteristics, they still have a serious problem from a practical standpoint in that they undergo oxidation in the course of ordinary use and that their characteristics change over time.

Under such circumstances, magnetooptical recording films of the Tb-Fe, Tb-Co or Tb-Fe-Co system to which metals such as Pt, Ni, Al, Cr and Pb have been added have been proposed to improve the oxidation resistance (see Journal of the Society of Applied Magnetism of Japan, page 209 of the Proceedings of the Ninth Conference of the Society of Applied Magnetism of Japan, and Japanese Patent L-O-P Publn. No. 255546/1986).

In these proposed magnetooptical recording films, however, the oxidation resistance is insufficiently improved and a high S/N ratio is not obtained unless a large bias magnetic field is applied (i.e. they have poor bias magnetic field dependency).

Nowadays, magnetooptical recording media having a magnetooptical layer, a protective layer and plastic substrate in this order are known. For example, Japanese Patent L-O-P Publn. No. 201546/1985 discloses magnetooptical recording media having a protective layer composed of cadmium sulfide (CdS) on a plastic substrate of polymethyl methacrylate (PMMA) or polycarbonate (PC) and a recording layer on said protective layer. Japanese Patent L-O-P Publn. No. 202351/1986 discloses magnetooptical recording media having a recording layer, a protective layer of a selenium compound such as zinc selenide (ZnSe) and a PMMA or PC substrate in this order.

In the magnetooptical recording media having a protective layer (enhancement layer) and a magnetooptical recording layer laminated to a common plastic substrate as cited above, however, the long-term stability of magnetooptical recording characteristics is still not sufficient.

The reason why such magnetooptical recording media cannot maintain their long-term stability of magnetooptical recording characteristics is considered to be because the commonly used plastic substrate is composed of polymethyl methacrylate (PMMA) or polycarbonate (PC), and the high water absorption properties thereof contribute towards the acceleration of the oxidation rate of the magnetooptical recording film, or because the conventionally used substrate such as a polycarbonate has poor adhesion to the enhancement film and cannot sufficiently inhibit oxidation of the magnetooptical recording film.

The present inventors have found that magnetooptical recording media having excellent long-term stability of magnetooptical recording characteristics and also excellent adhesion between a substrate and a protective layer can be obtained by using a substrate composed of a random copolymer of ethylene and a cycloolefin having a specific structure and by providing an enhancement film (protective layer) between the substrate and the magnetooptical recording film.

Furthermore, the present inventors found that a double-sided magnetooptical recording media in which the above-mentioned properties are excellent may be produced by laminating two magnetooptical recording media with substrates to each other so that their substrates are in opposite directions, said substrates being composed of a random copolymer composition of ethylene and cycloolefin having a specific structure and having a specific enhancement film (protective layer) between the substrate and magnetooptical recording film.

Still further, the present inventors found that magnetooptical recording media having excellent in oxidation resistance and magnetooptical recording characteristics are obtained by laminating a magnetooptical recording film on an enhancement film such as mentioned above formed on the aforesaid specific substrate, said recording film being composed of (i) at least one 3d transition metal element, (ii) a corrosion resistant metal and (iii) at least one rare earth element, the content of said corrosion resistant metal being from 5 to 30 atom %.

The present invention is intended to solve the various problems associated with the prior art as mentioned above, and provides magnetooptical recording media having excellent adhesion between the substrate and

enhancement film, excellent oxidation resistance and excellent long-term stability of magnetooptical recording characteristics.

EP-A-320,286, relevant under Article 54(3) EPC, discloses a magnetooptical recording medium comprising a transparent substrate of, for example, a random copolymer of ethylene and a cycloolefin which may be of formula [I] as hereinafter defined, a first protective film, a magnetooptical recording film and a second protective film.

The present invention provides in a first embodiment a magnetooptical recording medium comprising a substrate, an enhancement film, a magnetooptical recording film and a reflection film in this order, wherein:

the substrate is formed from a composition which comprises

a cycloolefin random copolymer [A] of ethylene and a cycloolefin of the general formula [I]

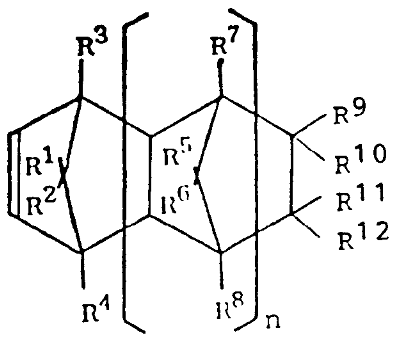

···[I]

wherein n is 0 or a positive integer, $R^1$ to $R^{12}$, which may be different, each represents a hydrogen atom, a halogen atom or a hydrocarbon group, provided that $R^9$ to $R^{12}$, when taken together, may form a mono- or polycyclic hydrocarbon ring which may optionally have a double bond or bonds, or $R^9$ and $R^{10}$ or $R^{11}$ and $R^{12}$, when taken together, may form an alkylidene group, said copolymer [A] having an intrinsic viscosity [η] of from 0.05 to 10 dl/g as measured at 135°C in decalin and a softening temperature (TMA) of at least 70°C, and

a cycloolefin random copolymer [B] of ethylene and a cycloolefin of general formula [I], said copolymer [B] having an intrinsic viscosity [η] of from 0.05 to 5 dl/g as measured at 135°C in decalin and a softening temperature (TMA) of less than 70°C, and a weight ratio of copolymer [A]: copolymer [B] being from 100/0.1 to 100/10;

the enhancement film is composed of $Si_3N_4$, $SiN_x(0<x<4/3)$, AlN, ZnSe, ZnS, Si or CdS; and

the refection film is composed of a Ni-Cr alloy or a Ni-Cu alloy containing Ni in an amount of 50-90 atom %.

The present invention also provides in a second embodiment a magnetooptical recording medium having a double-sided structure of first and second magnetooptical recording media wherein each of said first and second magnetooptical recording media comprises a substrate, an enhancement film, a recording film and a reflection film in this order, wherein said substructure is as defined above, and wherein the first magnetooptical recording medium is laminated to the second magnetooptical film through an adhesive film so that the reflection film of the first magnetooptical recording medium and that of the second magnetooptical recording medium face each other. In this second embodiment of the present invention the first and second magnetooptical recording media may, for example, be the media as defined above in the first embodiment of the present invention. Furthermore in the second embodiment the composition from which each substrate is formed need not contain the copolymer [B], thus providing a third embodiment of the present invention.

In the cycloolefin random copolymer as mentioned above, the cycloolefin component has a structure of the general formula [II]:

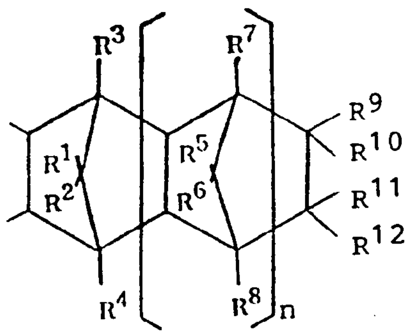 ···[II]

wherein n and $R_1$ to $R_{12}$ are as defined above.

In the second and third embodiments of the present invention, the enhancement film formed on the substrate is preferably composed of $Si_3N_4$, $SiN_x$ ($0 < x < 4/3$), AlN, ZnSe, ZnS, Si or CdS.

In the first, second and third embodiments of the present invention, it is desirable to use as the magnetooptical recording film formed on the aforementioned substrate an amorphous alloy film comprising (i) at least one 3d transition metals, and either or both of (ii) from 5 to 30 atom% of at least one corrosion resistant metal and (iii) at least one rare earth element, and having an easy axis of magnetization perpendicular to said film.

Figs. 2 and 3 are sectional views of magnetooptical recording media of the present invention.

Fig. 4 is a graph showing the relationship between the Co/(Fe + Co) atomic ratio and the noise level (dBm) of a magnetooptical recording film containing Pt.

Fig. 5 is a graph showing the relationship between the Co/(Fe + Co) atomic ratio and the noise level (dBm) of a magnetooptical recording film containing Pd.

Fig. 6 is a graph showing the relationship between the Co/(Fe + Co) atomic ratio and the erasion deterioration in terms of the $\Delta C/N$ in dB of a magnetooptical recording film.

Fig. 7 is a graph showing the relationship between the Pt and/or Pd atomic% content and the oxidation resistance in terms of the $\Delta C/N$ in dB of magnetooptical recording films containing Pt and Pd, respectively.

Fig. 8 is a graph showing the relationship between the bias magnetic field on Oe and the C/N ratio on magnetooptical recording films, one containing Pt and the other containing no Pt.

Fig. 9 is a graph showing the relationship between the Pt or Pd atom% content and the minimum bias magnetic field H sat. in Oe on magnetooptical recording films containing Pt and Pd, respectively.

The results shown in Figs. 4 to 9 were obtained for magnetooptical recording media, each having a structure as shown in Fig. 2 and comprising a substrate of a cycloolefin random copolymer composition obtained in Referential Example 1 and thereon an enhancement film of $SiN_x$ ($0 < x < 4/3$, refractive index $n = 2.3$, $k = 0.014$) of a thickness of 700 Å, a magnetooptical recording film of a thickness of 300 Å and a nickel chromium alloy film (reflection film) of a thickness of 1000 Å successively laminated.

The magnetooptical recording media of the present invention are further illustrated below in more detail.

As shown in Fig. 2, the first embodiment of a magnetooptical recording medium 1a of the invention has a structure wherein an enhancement film 3 and a magnetooptical film 4 are laminated in this order on a substrate 2. A reflection film 5 is provided on the magnetooptical recording film 4.

As shown in Fig. 3, the second embodiment of a magnetooptical recording medium 1b of the invention has a structure wherein a first magnetooptical recording medium A having laminated an enhancement film 3a, a magnetooptical recording film 4a and a reflection film 5a in that order on a substrate 2a and a second magnetooptical recording medium B having laminated an enhancement film 3b, a magnetooptical film 4b and a reflection film 5b in that order on a substrate 2b are laminated to each other through an adhesive layer 6 so that the reflection film 5a of the first magnetooptical recording medium A and the reflection film 5b of the second magnetooptical recording medium B face each other.

In the second magnetooptical recording medium 1b of the invention, the substrate 2a and substrate 2b may be the same or different, the enhancement film 3a and enhancement film 3b may be the same or different, the magnetooptical recording films 4a and 4b may be the same or different, and the reflection films 5a and 5b may be the same or different.

In the first and second magnetooptical recording media 1a and 1b of the present invention, substrates 2 and 2a are formed from a cycloolefin random copolymer composition comprising a cycloolefin random copolymer [A] and a cycloolefin random copolymer [B] as defined above.

In formula [I], n is preferably not more than 3.

As shown in Fig. 3, the third embodiment of a magnetooptical recording medium 1b of the present invention

has a structure wherein the aforementioned first magnetooptical recording medium A and the aforementioned second magnetooptical recording medium B are laminated to each other through an adhesive layer 6 so that their reflection films 5a and 5b face each other.

In the third magnetooptical recording medium 1b of the invention, the substrates 2a and 2b may be the same or different so long as they are formed from the aforementioned cycloolefin random copolymer [A], the enhancement films 3a and 3b may be the same or different, the magnetooptical recording films 4a and 4b may be the same or different, and the reflection films 5a and 5b may be the same or different.

The cycloolefin which is a constituent component of the above-mentioned cycloolefin random compolymers is at least one cycloolefin selected from unsaturated monomers of formula [I]. The cycloolefins of formula [I] may easily be prepared by a condensation reaction of cyclopentadienes with appropriate olefins or cycloolefins by a Diels-Alder reaction.

The cycloolefins of formula [I] are, for example, the compounds exemplified in Table 1 or, in addition to 1,4,5,8-dimethano-1,2,3,4,4a,5,8,8a-octahydronaphthalene, octahydronaphthalenes as 2-methyl-1,4,5,8-dimethano-1,2,3,4,4a,5,8,8a-octahydronaphthalene, 2-ethyl-1,4,5,8-dimethano-1,2,3,4,4a,5,8,8a-octahydronaphthalene, 2-propyl-1,4,5,8-dimethano-1,2,3,4,4a,5,8,8a-octahydronaphthalene, 2-hexyl-1,4,5,8-dimethano-1,2,3,4,4a,5,8,8a-octahydronaphthalene, 2,3-dimethyl-1,4,5,8-dimethano-1,2,3,4,4a,5,8,8a-octahydronaphthalene, 2-methyl-3-ethyl-1,4,5,8-dimethano-1,2,3,4,4a,5,8,8a-octahydronaphthalene, 2-chloro-1,4,5,8-dimethano-1,2,3,4,4a,5,8,8a-octahydronaphthalene, 2-bromo-1,4,5,8-dimethano-1,2,3,4,4a,5,8,8a-octahydronaphthalene, 2-fluoro-1,4,5,8-dimethano-1,2,3,4,4a,5,8,8a-octahydronaphthalene, 2,3-dichloro-1,4,5,8-dimethano-1,2,3,4,4a,5,8,8a-octahydronaphthalene, 2-cyclohexyl-1,4,5,8-dimethano-1,2,3,4,4a,5,8,8a-octahydronaphthalene, 2-n-butyl-1,4,5,8-dimethano-1,2,3,4,4a,5,8,8a-octahydronaphthalene and 2-isobutyl-1,4,5,8-dimethano-1,2,3,4,4a,5,8,8a-octahydronaphthalene.

Table 1

| Chemical formula | Compound name |
| --- | --- |
| 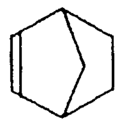 | Bicyclo[2,2,1]hept-2-ene |
| 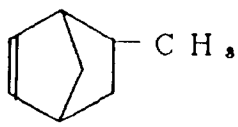 | 6-Methylbicyclo[2,2,1]hept-ene |
| 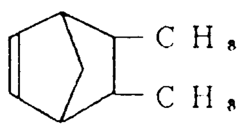 | 5,6-Dimethylbicyclo[2,2,1]hept-2-ene |
| 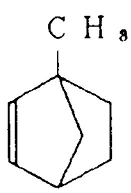 | 1-Methylbicyclo[2,2,1]hept-2-ene |
| 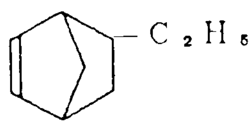 | 6-Ethylbicyclo[2,2,1]hept-2-ene |
| 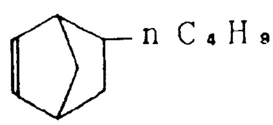 | 6-Butylbicyclo[2,2,1]hept-2-ene |
| 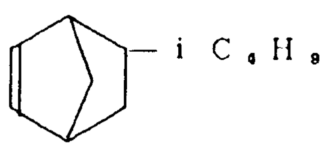 | 6-Isobutylbicyclo[2,2,1]hept-2-ene |

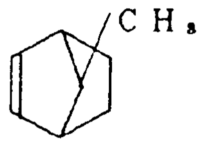

7-Methylbicyclo[2,2,1]hept-2-ene

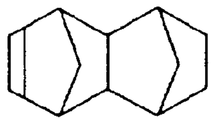

Tetracyclo[4,4,0,$1^{2.5}$,$1^{7.10}$]-3-dodecene

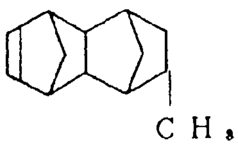

8-Methyltetracyclo[4,4,0, $1^{2.5}$,$1^{7.10}$]-3-dodecene

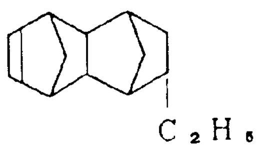

8-Ethyltetracyclo[4,4,0, $1^{2.5}$,$1^{7.10}$]-3-dodecene

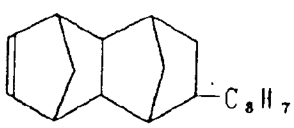

8-Propyltetracyclo[4,4,0, $1^{2.5}$,$1^{7.10}$]-3-dodecene

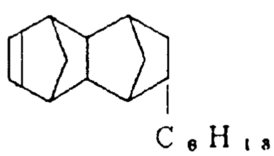

8-Hexyltetracyclo[4,4,0, $1^{2.5}$,$1^{7.10}$]-3-dodecene

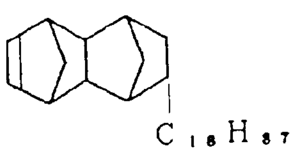

8-Stearyltetracyclo[4,4,0, $1^{2.5}$,$1^{7.10}$]-3-dodecene

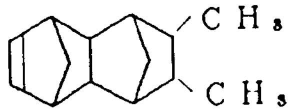

8,9-Dimethyltetracyclo[4,4,0,$1^{2.5}$,$1^{7.10}$]-3-dodecene

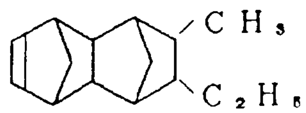

8-Methyl-9-ethyltetracyclo[4,4,0,$1^{2.5}$,$1^{7.10}$]-3-dodecene

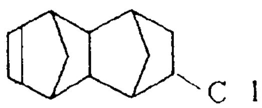

8-Chlorotetracyclo[4,4,0,$1^{2.5}$,$1^{7.10}$]-3-dodecene

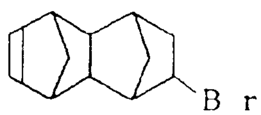

8-Bromotetracyclo[4,4,0,$1^{2.5}$,$1^{7.10}$]-3-dodecene

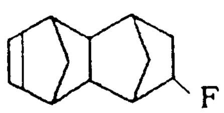

8-Fluorotetracyclo[4,4,0,$1^{2.5}$,$1^{7.10}$]-3-dodecene

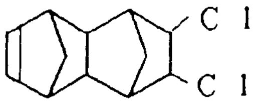

8,9-Dichlorotetracyclo[4,4,0,$1^{2.5},1^{7.10}$]-3-dodecene

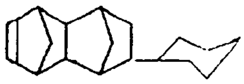

8-Cyclohexyltetracyclo[4,4,0,$1^{2.5},1^{7.10}$]-3-dodecene

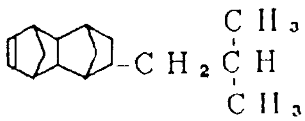

8-Isobutyltetracyclo[4,4,0,$1^{2.5},1^{7.10}$]-3-dodecene

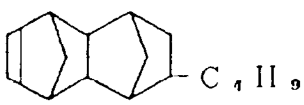

8-Butyltetracyclo[4,4,0,$1^{2.5},1^{7.10}$]-3-dodecene

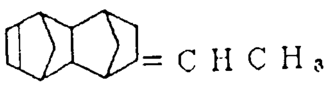

8-Ethylidenetetracyclo[4,4,0,$1^{2.5},1^{7.10}$]-3-dodecene

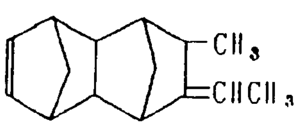

8-Ethylidene-9-methyltetracyclo[4,4,0,$1^{2.5},1^{7.10}$]-3-dodecene

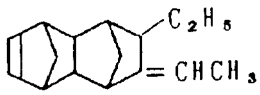

8-Ethylidene-9-ethyltetracyclo $[4,4,0,1^{2.5},1^{7.10}]$-3-dodecene

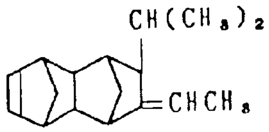

8-Ethylidene-9-isopropyltetracyclo $[4,4,0,1^{2.5},1^{7.10}]$-3-dodecene

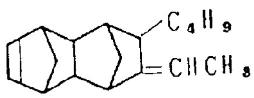

8-Ethylidene-9-butyltetracyclo $[4,4,0,1^{2.5},1^{7.10}]$-3-dodecene

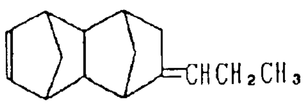

8-n-Propylidenetetracyclo $[4,4,0,1^{2.5},1^{7.10}]$-3-dodecene

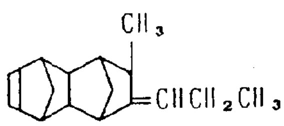

8-n-Propylidene-9-methyltetracyclo $[4,4,0,1^{2.5},1^{7.10}]$-3-dodecene

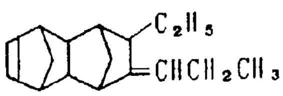

8-n-Propylidene-9-ethyltetracyclo $[4,4,0,1^{2.5},1^{7.10}]$-3-dodecene

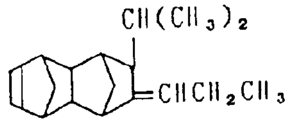

8-n-Propylidene-9-isopropyltetracyclo[4,4,0,$1^{2.5}$,$1^{7.10}$]-3-dodecene

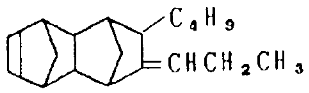

8-n-Propylidene-9-butyltetracyclo [4,4,0,$1^{2.5}$,$1^{7.10}$]-3-dodecene

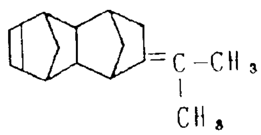

8-Isopropylidenetetracyclo [4,4,0,$1^{2.5}$,$1^{7.10}$]-3-dodecene

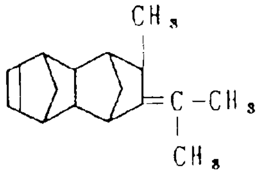

8-Isopropylidene-9-methyltetracyclo [4,4,0,$1^{2.5}$,$1^{7.10}$]-3-dodecene

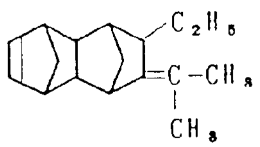

8-Isopropylidene-9-ethyltetracyclo [4,4,0,$1^{2.5}$,$1^{7.10}$]-3-dodecene

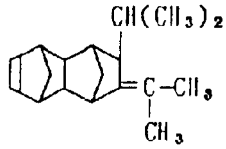

8-Isopropylidene-9-isopropyltetracyclo[4,4,0,$1^{2.5}$,$1^{7.10}$]-3-dodecene

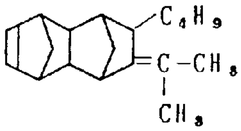

8-Isopropylidene-9-butyltetracyclo [4,4,0,$1^{2.5}$,$1^{7.10}$]-3-dodecene

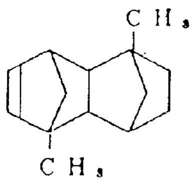

5,10-Dimethyltetracyclo [4,4,0,$1^{2.5}$,$1^{7.10}$]-3-dodecene

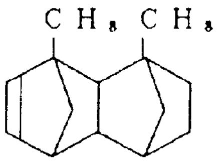

2,10-Dimethyltetracyclo-[4,4,0,$1^{2.5}$,$1^{7.10}$]-3-dodecene

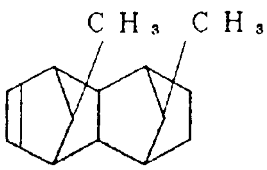

11,12-Dimethyltetracyclo-[4,4,0,$1^{2.5}$,$1^{7.10}$]-3-dodecene

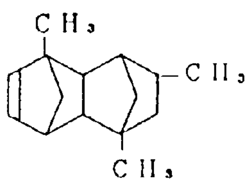

2,7,9-Trimethyltetracyclo-[4,4,0,$1^{2.5}$,$1^{7.10}$]-3-dodecene

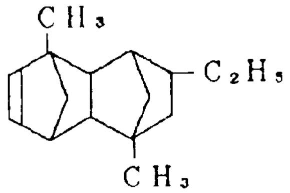

9-Ethyl-2,7-dimethyltetracyclo-[4,4,0,$1^{2.5}$,$1^{7.10}$]-3-dodecene

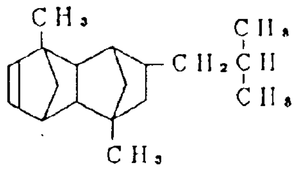

9-Isobutyl-2,7-dimethyltetracyclo-[4,4,0,$1^{2.5}$,$1^{7.10}$]-3-dodecene

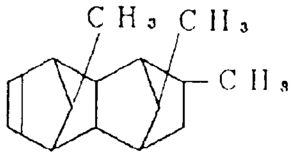

9,11,12-Trimethyltetracyclo-[4,4,0,$1^{2.5}$,$1^{7.10}$]-3-dodecene

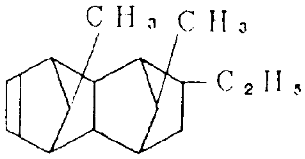

9-Ethyl-11,12-dimethyltetracyclo-[4,4,0,$1^{2.5}$,$1^{7.10}$]-3-dodecene

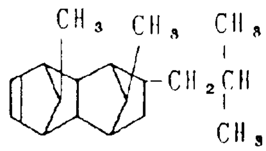

9-Isobutyl-11,12-dimethyltetracyclo-[4,4,0,$1^{2.5}$,$1^{7.10}$]-3-dodecene

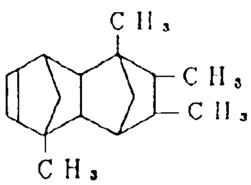

5,8,9,10-Tetramethyltetracyclo-[4,4,0,$1^{2.5}$,$1^{7.10}$]-3-dodecene

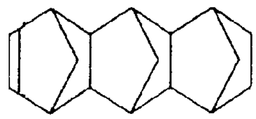

Hexacyclo[6,6,1,$1^{3.6}$,$1^{10.13}$,$0^{2.7}$,$0^{9.14}$]-4-heptadecene

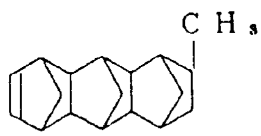

12-Methylhexacyclo[6,6,1,$1^{3.6}$,$1^{10.13}$,$0^{2.7}$,$0^{9.14}$]-4-heptadecene

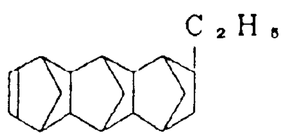

12-Ethylhexacyclo[6,6,1,$1^{3.6}$,$1^{10.13}$,$0^{2.7}$,$0^{9.14}$]-4-heptadecene

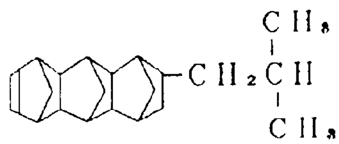

12-Isobutylhexacyclo[6,6,1,$1^{3.6}$,$1^{10.13}$,$0^{2.7}$,$0^{9.14}$]-4-heptadecene

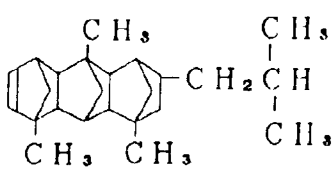

1,6,10-Trimethyl-12-isobutyl-hexacyclo[6,6,1,$1^{3.6}$,$1^{10.13}$,$0^{2.7}$,$0^{9.14}$]-4-heptadecene

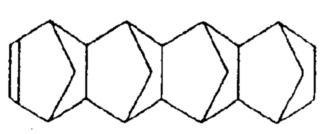

Octacyclo[8,8,0,$1^{2.9}$,$1^{4.7}$,1,$^{11.18}$,$1^{13.16}$,$0^{3.8}$,$0^{12.17}$]-5-docosen

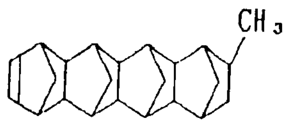

15-Methyloctacyclo[8,8,0,$1^{2.9}$,$1^{4.7}$, 1,$^{11.18}$, $1^{13.16}$,$0^{3.8}$,$0^{12.17}$]-5-docosen

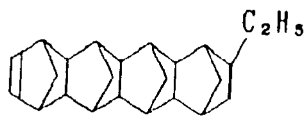

15-Ethyloctacyclo[8,8,0,$1^{2.9}$,$1^{4.7}$, 1,$^{11.18}$, $1^{13.16}$,$0^{3.8}$,$0^{12.17}$]-5-docosen

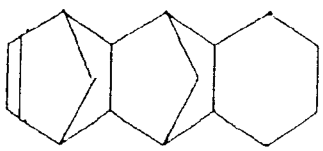

Pentacyclo[6,6,1,$1^{3.6}$,$0^{2.7}$,$0^{9.14}$]-4-hexadecene

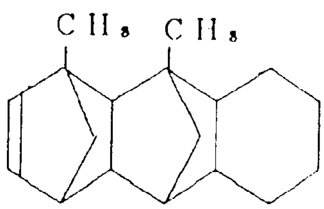

1,3-Dimethylpentacyclo[6,6,1, $1^{3.6}$,$0^{2.7}$,$0^{9.14}$]-4-hexadecene

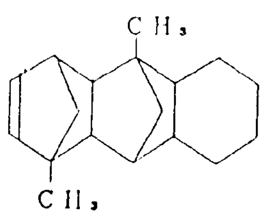

1,6-Dimethylpentacyclo[6,6,1, $1^{3.6}$,$0^{2.7}$,$0^{9.14}$]-4-hexadecene

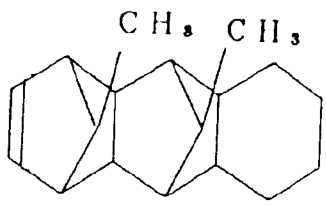

15,16-Dimethylpentacyclo[6,6,1, $1^{3.6}$,$0^{2.7}$,$0^{9.14}$]-4-hexadecene

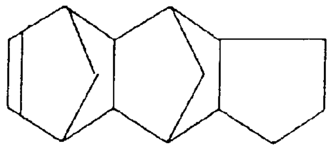

Pentacyclo[6,5,1,1$^{3.6}$,0$^{2.7}$,0$^{9.13}$]-4-pentadecene

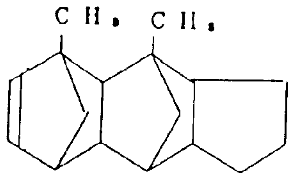

1,3-Dimethylpentacyclo[6,5,1,1$^{3.6}$,0$^{2.7}$,0$^{9.13}$]-4-pentadecene

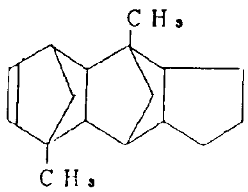

1,6-Dimethylpentacyclo[6,5,1,1$^{3.6}$,0$^{2.7}$,0$^{9.13}$]-4-pentadecene

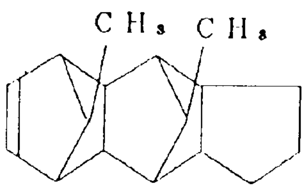

14,15-Dimethylpentacyclo[6,5,1,1$^{3.6}$,0$^{2.7}$,0$^{9.13}$]-4-pentadecene

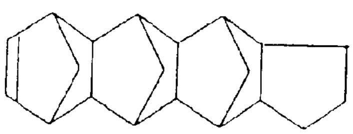

Heptacyclo[8,7,0,1$^{2.9}$,1$^{4.7}$,1$^{11.17}$,0$^{3.8}$,0$^{12.16}$]-5-icosene

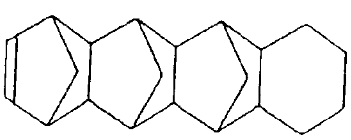

Heptacyclo[8,8,0,1$^{2.9}$,1$^{4.7}$,1$^{11.18}$,0$^{3.8}$,0$^{12.17}$]-5-henicosene

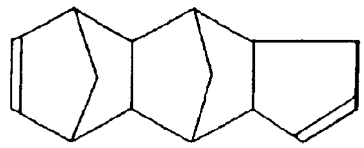

Pentacyclo[6,5,1,$1^{3.6}$,
$0^{2.7}$,$0^{9.13}$]-4,10-pentadecadiene

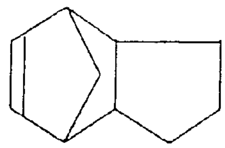

Tricyclo[4,3,0,$1^{2.5}$]-3-decene

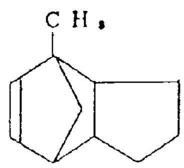

2-Methyl-tricyclo[4,3,0,$1^{2.5}$]-3-decene

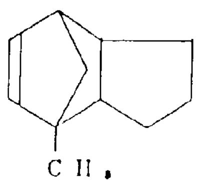

5-Methyl-tricyclo[4,3,0,$1^{2.5}$]-3-decene

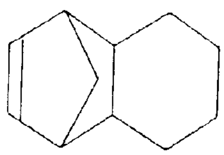

Tricyclo[4,4,0,$1^{2.5}$]-3-undecene

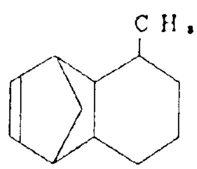

10-Methyl-tricyclo[4,4,0,$1^{2.5}$]-
3-undecene

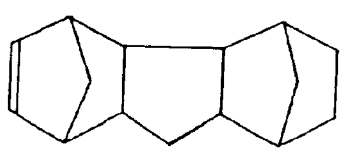

Pentacyclo[4,7,0,$1^{2.5}$,$0^{8.13}$,$1^{9.12}$]-3-
pentadecene

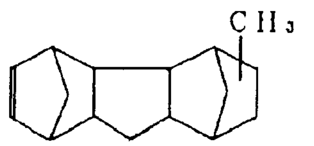

Methyl-substituted pentacyclo $[4,7,0,1^{2.5},0^{8.13},1^{9.12}]$-3-pentadecene

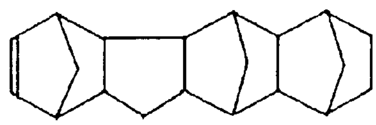

Heptacyclo$[7,8,0,1^{3.6},0^{2.7},1^{10.17},0^{11.16},1^{12.15}]$-4-icosene

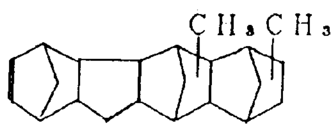

Dimethyl-substituted heptacyclo $[7,8,0,1^{3.6},0^{2.7},1^{10.17},0^{11.16},1^{12.15}]$-4-icosene

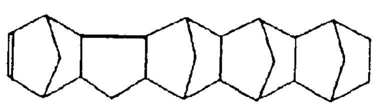

Nonacyclo$[9,10,1,1^{4.7},0^{3.8},0^{2.10},0^{12.21},1^{13.20},0^{14.19},1^{15.18}]$-5-pentacosene

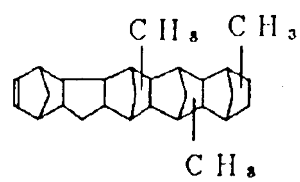

Trimethyl-substituted nonacyclo $[9,10,1,1^{4.7},0^{3.8},0^{2.10},0^{12.21},1^{13.20},0^{14.19},1^{15.18}]$-5-pentacosene

The cycloolefin random copolymers [A] and [B] comprise ethylene units and the above-mentioned cycloolefin units as essential components. However, if necessary, said copolymers may contain other copolymerizable unsaturated monomer components so long as they do not hinder the object of the present invention. The unsaturated monomers which may be copolymerized, if necessary, with copolymers [A] and [B] include, for example, alpha-olefins having from 3 to 20 carbon atoms such as propylene, 1-butene, 4-methyl-1-pentene, 1-hexene, 1-octene, 1-decene, 1-dodecene, 1-tetradecene, 1-hexadecene, 1-octadecene and 1-eicocene, which may be used in an amount of up to an equimolar amount to the ethylene component unit in the resulting random copolymer.

In the cycloolefin random copolymer [A], recurring units (a) derived from ethylene are generally present in an amount of from 40 to 85 mol%, preferably from 50 to 75 mol%, while recurring units (b) derived from the cycloolefin are generally present in an amount of from 15 to 60 mol%, preferably from 25 to 50 mol%. These recurring units (a) and (b) are arranged at random in the substantially linear chain of copolymer [A]. The molar

percentage of recurring units (a) and (b) can be determined by $^{13}$C-NMR. The fact that the cycloolefin random copolymer [A] is completely soluble in decalin at 135°C confirms that it is substantially linear and free from a gel-forming crosslinked structure.

The cycloolefin random copolymer [A] has an intrinsic viscosity [η] of from 0.05 to 10 dl/g, preferably from 0.08 to 5 dl/g, as measured in decalin at 135°C.

The softening temperature (TMA) of the cycloolefin random copolymer [A] as measured by a thermal mechanical analyzer is at least 70°C, preferably from 90 to 250°C, more preferably from 100 to 200°C. The softening temperature (TMA) referred to above can be determined by monitoring the thermal deformation behavior of a 1 mm sheet of the copolymer [A] using a thermomechanical analyzer manufactured and sold by Du Pont. More specifically, a quartz needle is vertically placed on the sheet under a load of 49 g and the assembly is heated at a rate of 5°C/min. The temperature at which the needle penetrates into the sheet by a depth of 0.635 mm is the TMA. This cycloolefin random copolymer [A] has a glass transition temperature (Tg) of normally from 50° to 230°C, preferably from 70° to 210°C.

The crystallinity of this cycloolefin random copolymer [A] as measured by X-ray diffractometry is normally from 0 to 10%, preferably from 0 to 7%, more preferably from 0 to 5%.

In the cycloolefin random copolymer [B], the recurring units (a) derived from ethylene are generally present in an amount of from 60 to 98 mol%, preferably from 60 to 95 mol%, and the recurring units (b) derived from the cycloolefin are generally present in an amount of from 2 to 40 mol%, preferably from 5 to 40 mol%. The recurring units (a) derived from ethylene and the recurring units (b) derived from the cycloolefin are arranged at random in the substantially linear chain of the copolymer [B]. The molar percentage of the recurring units (a) and (b) can be determined by $^{13}$C-NMR. The fact that the cycloolefin random copolymer [B] is completely soluble in decalin at 135°C confirms that it is substantially linear and free from a gel-forming crosslinked structure.

The cycloolefin random copolymer [B] as mentioned above has an intrinsic viscosity [η] of from 0.05 to 5 dl/g, preferably from 0.08 to 3 dl/g,as measured in decalin at 135°C.

The softening temperature (TMA) of the cycloolefin random copolymer [B] as measured by a thermal mechanical analyzer is less than 70°C, preferably from -10° to 60°C, and further preferably from 10° to 55°C. The cycloolefin random copolymer [B] has a glass transition temperature (Tg) of normally from -30° to 60°C, preferably from -20° to 50°C.

The crystallinity of this cycloolefin random copolymer [B] as measured by X-ray diffractometry is normally from 0 to 10%, preferably from 0 to 7%, and further preferably from 0 to 5%.

In the first and second magnetooptical recording media of the present invention, the cycloolefin random copolymer [A]/the cycloolefin random copolymer [B] weight ratio in the cycloolefin random copolymer composition used for the forming substrate is from 100/0.1 to 100/10, preferably from 100/0.3 to 100/7, more preferably from 100/0.5 to 100/5. By mixing component [B] with component [A] in the cycloolefin random copolymer composition, there are obtained such advantages that adhesion between the substrate and the enhancement film used in the invention under severe conditions is further improved in comparison with the case of the cycloolefin random copolymer composition containing only component [A], while maintaining the excellent transparency and surface smoothness of the substrate itself. Thus, the substrate used in the present invention, which is formed from the above-mentioned cycloolefin random copolymer composition comprising a blend of the above-mentioned components [A] and [B], is such that excellent adhesion between said substrate and the enhancement film used in the invention is maintained even after the substrate stands under conditions of high temperature and humidity.

The cycloolefin random copolymer [A] or the cycloolefin copolymers [A] and [B] constituting the cycloolefin random copolymer or the cycloolefin random copolymer composition used in the present invention for forming the substrate may all be prepared by the processes described in Japanese Patent L-O-P Publns. Nos. 168708/1985, 120816/1986, 115912/1986 and 115916/1986, Japanese Patent Applns. Nos. 95905/1986 and 95906/1986, Japanese Patent L-O-P Publns. Nos. 271308/1986 and 272216/1986, while suitably selecting the conditions.

The above-mentioned cycloolefin random copolymer composition may be prepared by known methods, for example, a method wherein the cycloolefin random copolymers [A] and [B] are prepared separately and blended by means of an extruder to prepare the composition, a so-called solution blending method wherein the copolymers [A] and [B] are individually dissolved thoroughly in an appropriate solvent, for example, a saturated hydrocarbon such as butane, hexane, decane or cyclohexane, or an aromatic hydrocarbon such as toluene, benzene or xylene, and the resulting solutions are then blended to prepare the composition, and a method wherein the copolymers [A] and [B] prepared by separate polymerizers are blended in another vessel to prepare the composition.

The cycloolefin copolymer composition thus prepared has an intrinsic viscosity [η] as measured in decalin

at 135°C of from 0.05 to 10 dl/g, preferably from 0.08 to 5 dl/g, a softening temperature (TMA) as measured by a thermal mechanical analyzer of from 70 to 250°C, preferably from 80 to 250°C, more preferably from 100 to 200°C, and a glass transition temperature (Tg) of from 70 to 230°C, preferably from 90° to 210°C.

Furthermore, the substrate may be made of polymers having recurring units of formula [III] resulting from ring opening of the cycloolefin monomers [I], or polymers having recurring units of formula [IV] resulting from hydrogenation of the units [III]:

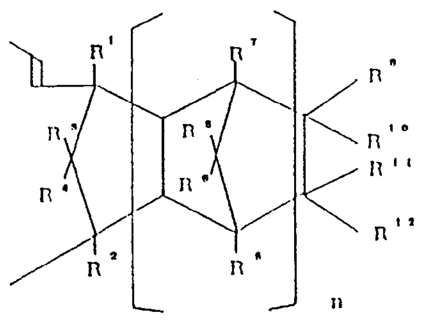

···[III]

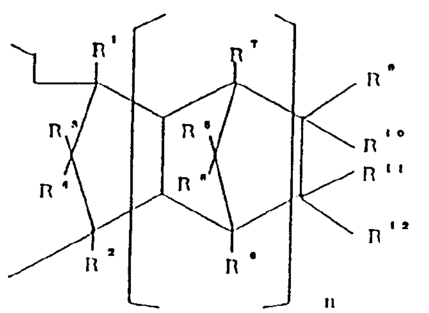

···[IV]

wherein n and $R^1$ to $R^{12}$ are as defined above.

In addition to the above-mentioned cycloolefin random copolymer components, the cycloolefin random copolymer or composition of the present invention may have incorporated therein, if necessary, various additives such as thermal stabilizers, weathering agents, antistatic agents, slip agents, anti-blocking agents, antifoggants, lubricants, dyes, pigments, natural oil, synthetic oil and wax. For example, the stabilizers which may be optionally incorporated include phenolic antioxidants such as tetrakis[methylene-3-(3,5-di-t-butyl-4-hydroxyphenyl)propionate]methane and β-(3,5-di-t-butyl-4-hydroxyphenyl) propionic acid alkyl ester (particularly preferred are alkyl esters of less than 18 carbon atoms), phenolic antioxidants such as (2,2'-oxamidobis-[ethyl-3-(3,5-di-t-butyl-4-hydroxyphenyl)propionate; metallic salts of fatty acid such as zinc stearate, calcium stearate, calcium 12-hydroxystearate; and fatty esters of polyhydric alcohol such as glycerin monostearate, glycerin distearate, pentaerythritol monostearate, pentaerythritol distearate, pentaerythritol tristearate. These compounds may be incorporated into the cycloolefin copolymer or composition thereof either singly or in combination. For example, there may be used such a combination of tetrakis[methylene-3-(3,5-di-t-butyl-4-hydroxyphenyl)propionate]methane with zinc stearate or glycerin monostearate.

In the present invention, it is particularly desirable to use phenolic antioxidants in combination with fatty esters of a polyhydric alcohol. The fatty esters are preferably those obtained by esterification of part of the alcoholic hydroxyl groups of a polyhydric alcohol of at least three valences.

The fatty esters of a polyhydric alcohol used above include fatty esters of glycerin such as glycerin monostearate, glycerin monolaurate, glycerin monomyristate, glycerin monopalmitate, glycerin distearate, glycerin dilaurate, and fatty esters of pentaerythritol such as pentaerythritol monostearate, pentaerythritol monolaurate, pentaerythritol distearate, pentaerythritol dilaurate, pentaerythritol tristearate.

The phenolic antioxidants are used in an amount, based on 100 parts by weight of the cycloolefin random copolymer composition, of from 0.01 to 10 parts by weight, preferably from 0.05 to 3 parts by weight, more preferably from 0.1 to 1 part by weight, and the fatty esters of a polyhydric alcohol are used in an amount, based on 100 parts by weight of said composition, of from 0.01 to 10 parts by weight, preferably from 0.05 to 3 parts by weight.

In the present invention, the above-mentioned cycloolefin random copolymer or composition thereof are

used for forming the substrate 2 (2a,2b) . This cycloolefin random copolymer or composition has a water absorption which is less than that of the polycarbonate or polymethylmethacrylate hitherto used as the substrate 2 (2a,2b). Hence the magnetooptical recording film 4 (4a,4b) formed on said substrate through the enhancement film (protective film) 3 (3a,3b) is less oxidized by the water content in the substrate. The substrate 2 (2a, 2b) formed from this cycloolefin copolymer or composition thereof has excellent adhesion to the enhancement film 3 (3a, 3b), and thus oxidation of the magnetooptical recording film 4 (4a, 4b) formed on the substrate through the enhancement film 3 (3a, 3b) is effectively inhibited. Accordingly, the magnetooptical recording media 1a (1b) has excellent in serviceability as well as long-term stability. In light of the foregoing, the double-sided magnetooptical recording medium 1b of the second and third recording media of the present invention is further improved in long-term stability, and is also free from warpage and cracks.

The substrate 2.(2a,2b) formed from the above-mentioned cycloolefin random copolymer or composition thereof has a small refractive index and accordingly a high sensitivity for read-out of the magnetooptical recording film 4 (4a,4b). A non-differential driving device may be used at the time of read-out.

The enhancement film 3 (3a, 3b) used in the present invention is in embodiment 1, or may be, in embodiments 2 or 3, composed of $Si_3N_4$, $SiN_4$ ($0 < x < 4/3$), AlN, ZnSe, ZnS, Si or CdS. The thickness of the enhancement film is generally from 100 to 1000 Å, preferably 300 to 850 Å. Of these components mentioned above, particularly preferred are $Si_3N_4$ and $SiN_x$($0 < x < 4/3$) from the standpoint of anti-crack properties.

In the magnetooptical recording media 1a (1b) of the present invention, the enhancement film enhances the sensitivity of said recording media 1a (1b) and also protects the magnetooptical recording film 4 (4a,4b). This enhancement film has a refractive index which is larger than that of the substrate.

The magnetooptical recording film 4 (4a, 4b) preferably used in the present invention includes amorphous metal alloy films having an easy axis of magnetization perpendicular to the film and containing, for example, (i) at least one 3d transition metals element and (iii) at least one rare earth element, preferably those containing (i) at least one 3d transition metals element, (ii) a corrosion resistant metal and (iii) at least one rare earth element.

The magnetooptical recording film 4 (4a, 4b) mentioned above is now further illustrated:

(i) The 3d transition metal used includes, for example, Fe, Co, Ti, V, Cr, Mn, Ni, Cu and Zn. Of these preferred are Fe and/or Co.

The 3d transition metal is preferably present in the magnetooptical recording film 4 (4a, 4b) in an amount of from 20 to 90 atom%, more preferably from 30 to 85 atom%, and most preferably from 35 to 80 atom%.

(ii) The corrosion resistant metal contained in the magnetooptical recording film 4 (4a, 4b) improves the oxidation resistance of said recording film. The corrosion resistant metal used includes, for example, Pt, Pd, Ti, Zr, Ta, Nb and Mo. Of these, preferred are Pt, Pd and Ti, and particularly Pt and/or Pd. By the addition of the corrosion resistant metal to the recording film 4 (4a, 4b), it becomes possible to erase the recording in a low bias magnetic field.

The corrosion resistant metal is preferably present in the recording film 4 (4a, 4b) in an amount of from 5 to 30 atom%, more preferably from 5 to 25 atom%, particularly from 10 to 25 atom%, and most preferably from 10 to 20 atom%.

With less than 5 atom% of the corrosion resistant metal, the resistance of the resulting magnetooptical recording film to oxidation is not appreciably improved, and thus the coercive force Hc of the film tends to greatly change with time, or the Kerr-rotation angle $\theta$ k tends to decrease. On the other hand, if the content of the corrosion resistant metal of the magnetooptical recording medium is in excess of 30 atom%, the Curie point of the resulting amorphous alloy film tends to be reduced and it often becomes lower than ambient temperature.

(iii) The magnetooptical recording film 4 (4a, 4b) is preferably composed of at least one rare earth element selected from the following in addition to the foregoing components (i) and (ii), namely Gd, Tb, Dy, Ho, Er, Tm, Yb, Lu, La, Ce, Pr, Nd, Pm, Sm and Eu.

Of these elements, preferred are Gd, Tb, Dy, Ho, Nd,Sm and Pr.

At least one rare earth element selected from the above is preferably present in the recording film 4 (4a, 4b) in an amount of from 5 to 50 atom%, more preferably from 8 to 45 atom%, and most preferably from 10 to 40 atom%.

In the present invention, the magnetooptical recording film 4 (4a, 4b) particularly desirably has the composition mentioned below:

(i) 3d Transition metal

The magnetooptical recording film 4 (4a, 4b), contains Fe or Co or both. The Fe and/or Co is preferably

present in the magnetooptical recording film in an amount of at least 40 atom% but not more than 80 atom%, preferably at least 40 atom% but less than 75 atom%, and more preferably at least 40 atom% but not more than 59 atom%.

Further, the Fe and/or Co are preferably present in the magnetooptical recording film in such an amount that the Co/(Fe + Co) atomic ratio is from 0 to 0.3, preferably from 0 to 0.2, and more preferably from 0.01 to 0.2.

When the amount of Fe and/or Co is in the range of at least 40 atom% but not more than 80 atom%, there is an advantage that the magnetooptical recording film has excellent resistance to oxidation and has an easy axis of magnetization perpendicular to the film.

In this connection, when Co is incorporated into a magnetooptical recording film, there are observed such phenomena as (a) the Curie point of the magnetooptical recording film increases and (b) the Kerr-rotation angle ($\theta$ k) becomes large. As the result, the recording sensitivity of the magnetooptical recording film can be adjusted by the amount of Co incorporated and, moreover, the carrier level of reproduced signal increases by incorporating Co.

Fig. 4 shows the relationship between the Co/(Fe + Co) atomic ratio and the noise level in dBm on a magnetooptical recording film of the PtTbFeCo series, and Fig. 5 shows a relationship between the Co/(Fe + Co) atomic ratio and the noise level in dBm on a magnetooptical recording film of the PdTbFeCo series.

As shown in Fig. 4, in a case of a magnetooptical recording film having a composition of $Pt_{13}Tb_{28}Fe_{50}Co_{9}$, as recommended herein, in which the Co/(Fe + Co) atomic ratio is 0.15, the noise level is -56 dBm, whereas when the composition is $Pt_{13}Tb_{28}Fe_{36}Co_{23}$, in which the Co(Fe + Co) atomic ratio is 0.39, the noise level is -50 dBm. It is understood from the fact that when the above-mentioned atomic ratio increases, the noise level tends to increase. Furthermore, as shown in Fig. 5, in a case of a magnetooptical recording film having a composition of $Pd_{14}Tb_{27}Fe_{52}Co_{7}$, as recommended herein, in which the Co/(Fe + Co) atomic ratio is 0.12, the noise level is -56 dBm, whereas when the composition is $Pd_{14}Tb_{27}Fe_{41}Co_{18}$, in which the Co/(Fe + Co) atomic ratio is 0.31, the noise level is -51 dBm.

Fig. 6 shows a relationship between the erasion deterioration in terms of $\Delta$C/N ratio in dB and the Co/(Fe + Co) atomic ratio on two series of magnetooptical recording films, one of the compositions being PtTbFeCo and the other being PdTbFeCo.

Specifically, even when a magnetooptical recording film having a composition of $Pt_{13}Tb_{28}Fe_{50}Co_{9}$, as recommended herein, in which the Co/(Fe + Co) atomic ratio is 0.155, has been irradiated with an increased energy at the time of erasing the information once recorded therein, no change in film properties occurs, and new information can be recorded on the erased recording film with the same C/N value as that prior to the erasion.

Furthermore, with a magnetooptical recording film recommended herein no change in film property will occur even when recording and erasing information are repeatedly performed. For instance, no decrease in the C/N ratio is observed even when the recording and erasing operations are performed 100,000 times in a magnetooptical recording film having a composition of $Pt_{13}Tb_{28}Fe_{50}Co_{9}$.

(ii) Corrosion resistant metal

Preferred magnetooptical recording films 4 (4a, 4b) contain at least one of Pt, Pd, Ti, Zr, Ta, Nb and Mo, preferably Pt or Pd, or both, as a corrosion resistant metal. The amount of Pt and/or Pd contained in the preferred magnetooptical recording films is from 5 to 30 atom%, preferably more than 10 atom% but not more than 30 atom%, more preferably more than 10 atom% but less than 20 atom%, and most preferably at least 11 atom% but not more than 19 atom%.

The presence in the magnetooptical recording film of Pt and/or Pd in an amount of at least 5 atom%, particularly in excess of 10 atom%, brings about advantages that resistance to oxidation of said recording film is excellent, and even when it is used for a prolonged period of time, no pit corrosion occurs and the C/N ratio does not become low. Similar advantages are also observed with Ti, Mo, Zr, Ta and Nb.

Fig. 7 shows the relationship between the content of Pt or Pd in the magnetooptical recording film and the decrease of the $\Delta$C/N ratio when said recording film is retained for 2000 hours under conditions of 85% RH and 80°C, in the case where the cycloolefin random copolymer composition is used for the substrate.

It is thus understood from Fig. 7 that when the amount in the magnetooptical recording film of Pt or Pd is at least 5 atom%, in particular more than 10 atom%, resistance to oxidation of said recording film improves, no pit corrosion occurs even after long-term use and the C/N ratio does not deteriorate.

For instance, is a magnetooptical recording film having a composition of $Pt_{13}Tb_{28}Fe_{50}Co_{9}$ or $Pd_{12}Tb_{28}Fe_{53}Co_{7}$, the C/N ratio will not change at all even when it is retained under conditions of 85% RH and 80°C for 1000 hours. In contrast thereto, a magnetooptical recording film having a composition of $Tb_{25}Fe_{68}Co_{7}$ containing no Pt or Pd has a great decrease in the C/N ratio when it is retained for 1000 hours under conditions

of 85% RH and 80°C.

By incorporation into a magnetooptical recording film of at least one element selected from Pt, Pd, Ti, Zr, Ta, Nb and Mo in an amount within the range as specified above, a sufficiently high C/N ratio can be obtained even by a small bias magnetic field when information is recorded on the magnetooptical recording film or when the information recorded is read out therefrom. If a sufficiently high C/N ratio is obtained by a small bias magnetic field, a magnet for producing the bias magnetic field can be made small in size and, moreover, heat generation from the magnet can be inhibited and hence simplification of a driving device for an optical disc bearing the magnetooptical recording film thereon is made possible. Moreover, because a sufficiently large C/N ratio is obtained by a small bias magnetic field, it becomes easy to design a magnet for magnetic field modulation recording capable of overwriting.

Fig. 8 shows the relationship between the bias magnetic field and the C/N ratio (dB) of a magnetooptical recording film having a recommended composition of $Pt_{13}Tb_{28}Fe_{50}Co_9$ and of a magnetooptical recording film having a composition of $Tb_{25}Fe_{68}Co_7$.

It is understood from Fig. 8 that in the conventionally known magnetooptical recording film of $Tb_{25}Fe_{68}Co_9$, the C/N ratio is not saturated unless a bias magnetic field of more than 250 Oe is applied, whereas in the magnetooptical recording film recommended herein, represented by $Pt_{13}Tb_{28}Fe_{50}Co_9$, recording can be performed even by a small bias magnetic field and the C/N ratio is saturated at a level of 120 Oe or more. In the following Examples and Comparative Examples, a Hsat value of the minimum bias magnetic field of each magnetooptical recording film is shown, at which the C/N ratio is saturated. For a smaller Hsat value, it follows that the C/N ratio is saturated by a small bias magnetic field.

Fig. 9 shows the relationship between the content of Pt or Pd and the minimum bias magnetic field (Hsat, (Oe)) on a magnetooptical recording film of the PtTbFeCo series and on a magnetooptical recording film of the PdTbFeCo series.

It is understood from Fig. 9 that the minimum bias magnetic field Hsat becomes sufficiently small when the content of Pt and/or Pd exceeds 10 atom%.

(iii) Rare earth element (RE)

The magnetooptical recording film 4 (4a,4b) contains at least one rare earth element (RE). Examples of the rare earth element are Nd, Sm, Pr, Ce, Eu, Gd, Tb, Dy and Ho, alone or in combination.

Of the rare earth elements illustrated above, preferred are Nd, Pr, Gd, Tb and Dy, and particularly preferred is Tb. The rare earth elements may be used in combination of two or more, and in this case the combination preferably contains at least 50 atom% of Tb.

From the standpoint of obtaining an optical magnetism having an easy axis of magnetization perpendicular to the film, it is preferable that this rare earth element is present in a magnetooptical recording film in an amount such that $0.15 \leqq x \leqq 0.45$, preferably $0.20 \leqq x \leqq 0.4$, wherein x represents RE/(RE + Fe + Co) [atomic ratio].

In the present invention, it is also possible to improve the Curie temperature, compensation temperature, coercive force Hc or Kerr-rotation angle $\theta$ k, or cheapen the cost of production by incorporating various elements into the magnetooptical recording films. These elements for the purpose intended may be used, for example, in a proportion of less than 10 atom% based on the total number of atoms of elements constituting the recording film.

Examples of useful elements for this purpose other than those constituents of the magnetooptical recording film include the elements mentioned below.

(I) 3d transition elements other than Fe and Co

Such transition elements include Sc, Ti, V, Cr, Mn, Ni, Cu and Zn.

Of these elements, preferred are Ti, Ni, Cu and Zn.

(II) 4d transition elements other than Pd

Such transition elements include Y, Zr, Nb, Mo, Tc, Ru, Rh, Ag and Cd.

Of these transition elements, preferred are Zr and Nb.

(III) 5d transition elements other than Pt

Such transition elements include Hf, Ta, W, Re, Os, Ir, Au and Hg.

Of these transition elements, preferred is Ta.

(IV) Group IIIB elements

B, Al, Ga, In, and Tl are used.

Of these elements, preferred are B, Al and Ga.

(V) Group IV B elements

C, Si, Ge, Sn and Pb are used.

Of these elements, preferred are Si, Ge, Sn and Pb.

(VI) Group V B elements

N, P, As, Sb and Bi are used.

Of these elements, preferred is Sb.

(VII) Group VI B elements

S, Se, Te and Po are used.

Of these elements, preferred is Te.

In the present invention, furthermore, magnetooptical recording films may be composed of (i) at least one 3d transition metal member and (iii) at least one rare earth element as mentioned above. Such magnetooptical recording films are preferably those of TbFeCo series, wherein preferably the amount of Tb is from 10 to 40 atom%, that of Fe is from 30 to 90 atom% and that of Co is from 0 to 30 atom%. In the present invention, magnetooptical recording films may contain (i) a 3d transition metal and (iii) a rare earth element as mentioned above, and may further contain other elements (e.g. elements of (I) - (VII) mentioned above). These may also be used as the magnetooptical recording film 4.

It has been confirmed by broad angle X-ray diffractometry that the magnetooptical recording films 4 (4a,4b) having a composition described above have an easy axis of magnetization perpendicular to the film plane and that many of them may be an amorphous thin film which exhibits a Kerr hysteresis of a good angular loop, indicating that it is perpendicularly magnetizable and capable of magnetooptical recording.

By the term "Kerr hysteresis of a good angular loop" used herein we mean that the ratio $\theta k_2/ k_1$ is at least 0.8 wherein $\theta k_1$ is a saturated Kerr-rotation angle that is a Kerr-rotation angle where the external magnetic field is maximum, and $k_2$ is a residual Kerr-rotation angle that is a Kerr-rotation angle where the external magnetic field is zero.

The thickness of the magnetooptical recording film 4 (4a,4b) is generally from 100 to 50000 Å, preferably from 100 to 3000 Å, and more preferably from about 150 to 2000Å. The reflection film 5 (5a, 5b) is preferably composed of a metal or alloy having a thermal conductivity of not higher than 2 J/cm·sec·K, preferably not higher than 1 J/cm·sec·K.

The reflection film 5 (5a, 5b) is also preferably composed of a metal or alloy having a reflectivity of at least 50%, preferably at least 70%, and a thermal conductivity of not higher than 2 J/cm·sec·K, preferably not higher than 1 J/cm·sec.·K.

Specifically, the reflection film 5 (5a, 5b) is composed of Pt having a thermal conductivity of 0.71 J/cm·sec·K, Pd having a thermal conductivity of 0.76 J/cm·sec·K, Ti having a thermal conductivity of 0.22 J/cm·sec·K, Co having a thermal conductivity of 0.99 J/cm·sec·K, Zr having a thermal conductivity of 0.23 J/cm·sec·K or alloys thereof. In the present invention, however, it is desirable to use the reflection film 5 (5a, 5b) composed of nickel alloy having a refractive index of at least 50%, preferably at least 70%, and a thermal conductivity of not higher than 2 J/cm·sec·K, preferably not higher than 1 J/cm·sec·K.

Suitable nickel alloys for constituting the reflection film 5 (5a, 5b) preferably comprise nickel as the primary component and at least one alloying metal selected from silicon, molybdenum, iron, chromium and copper. Such nickel alloys contain nickel in an amount of from 30 to 99 atom%, preferably from 50 to 90 atom%.

Examples of the nickel alloys usable herein to constitute the reflection film include, for example:

Ni-Cr alloys (for example, an alloy of from 30 to 99 atom% of Ni and from 1 to 70 atom% of Cr, preferably an alloy of from 70 to 95 atom% of Ni and from 5 to 30 atom% of Cr),

Ni-Si alloys (for example, an alloy of 85 atom% of Ni, 10 atom% of Si, 3 atom% of Cu and 2 atom% of Al).

Ni-Cu alloys (for example, an alloy of 63 atom% of Ni, from 29 to 30 atom% of Cu, from 0.9 to 2 atom% of Fe, from 0.1 to 4 atom% of Si and from 0 to 2.75 atom% of Al).

Ni-Mo-Fe alloys (for example, an alloy of from 60 to 65 atom% of Ni, from 25 to 35 atom% of Mo and 5 atom% of Fe.),

Ni-Mo-Fe-Cr alloys (for example, an alloy of from 55 to 60 atom% of Ni, from 15 to 20 tom% of Mo, 6 atom% of Fe, from 12 to 16 atom% of Cr, and 5 atom% of W.),

Ni-Mo-Fe-Cr-Cu alloys (for example, an alloy of 60 atom% of Ni, 5 atom% of Mo, 8 atom% of Fe, 21 atom% of Cr, 3 atom% of Cu, 1 atom% of Si, 1 atom% of Mn, and 1 atom% of W; and an alloy of from 44 to 47 atom% of Ni, from 5.5 to 7.5 atom% of Mo, from 21 to 23 atom% of Cr, 0.15 atom% of Cu, 1 atom% of Si, from 1 to 2 atom% of Mn, 2.5 atom% of Co, 1 atom% of W, from 1.7 to 2.5 atom% of Nb, and a balance of Fe),

Ni-Cr-Cu-Mo alloys (for example, an alloy of from 56 to 57 atom% of Ni, from 23 to 24 atom% of Cr, 8 atom% of Cu, 4 atom% of Mo, 2 atom% of W, and 1 atom% of Si or Mn),

Ni-Cr-Fe alloys (for example, an alloy of 79.5 atom% of Ni, 13 atom% of Cu, 6.5 atom% of Fe and 0.2 atom% of Cu; and an alloy of from 30 to 34 atom% of Ni, from 19 to 22 atom% of Cr, 0.5 atom% of Cu, 1 atom% of Si, 1.5 atom% of Mn and a balance of Fe),

When compared with a magnetooptical recording medium having a reflection film comprising aluminium,

copper or gold, a magnetooptical recording medium having the reflection film 5 (5a, 5b) described herein has an excellent C/N ratio.

In fact, when a magnetooptical recording film having a reflection film composed of a metal such as aluminium having an increased thermal conductivity is irradiated with a laser beam to form pits in the film, heat energies from the laser beam are conducted to the reflection film and diffused. As a result, an increased recording laser power is required; larger and irregular pits are formed in the film; and a dependency of the recording power upon the thickness of the reflection film becomes excessively large.

Further, the reflection film proposed herein enhances the resistance to oxidation of the magnetooptical recording film, and thus provides a magnetooptical recording medium capable of maintaining an excellent reliability for a prolonged period of time.

Preferred reflection films comprise a nickel alloy having a thermal conductivity of not higher than 2 J/cm·sec·K, preferably not higher than 1 J/cm·sec·K, particularly preferred from the view point of a high C/N ratio, are reflection films composed of a Ni-Cr alloy comprising from 30 to 99 atom% of Ni and from 1 to 70 atom% of Cr, in particular from 70 to 95 atom% of Ni and from 5 to 30 atom% of Cr.

When a reflection film composed of a metal or alloy, in particular a nickel alloy having a reduced thermal conductivity and an increased reflectance, is used according to the invention, a large Kerr-rotation angle and a higher reflectance can be realized even with a thinner magnetooptical recording film.

The thickness of the reflection film 5 (5a, 5b) is normally from 100 to 4000 Å, preferably from about 200 to about 2000 Å.

The total thickness of the magnetooptical recording film 4 (4a, 4b) and the reflection film 5 (5a, 5b) is normally from 300 to 4600 Å, preferably from about 350 to about 2400 Å.

In the second and third magnetooptical recording media 1b of the present invention, the reflection film 5a of the first magnetooptical recording medium A and the reflection film 5b of the second magnetooptical recording medium B are bonded to each other through an adhesive layer 6.

The adhesive layer 6 used above preferably contains a hot-melt adhesive of polyolefin, EVA, synthetic rubber, polyester or polyamide, and a reactive adhesive of resorcinol, cyanoacrylate, epoxy, urethane or ultraviolet-curing acrylate. In the double-sided magnetooptical recording media of the present invention, it is desirable to use hot-melt adhesives.

Of the hot-melt adhesives mentioned above, preferred are polyolefin hot-melt adhesives having a softening point of at least 130°C, preferably exceeding 140°C, and particularly at least 141°C.

The use of the hot-melt adhesives having a high softening point as mentioned above brings about advantages such that no slip-plane occurs between two magnetooptical recording media laminated to each other even when the double-sided magnetooptical recording medium is used for a long period of time under conditions of high temperature and humidity and also deformation such as warpage is small.

Preferred hot-melt adhesives having a softening point of at least 130°C are polyolefin hot-melt adhesives containing an ethylene/propylene/α-olefin random terpolymer (A), a styrene resin (B) and a petroleum resin (C).

Of $C_4$ - $C_{20}$ α-olefins constituting the above-mentioned random terpolymer (A), particularly preferred are 1-butene and 4-methyl-1-pentene. The styrene resin (B) includes polymers and copolymers containing styrene units or styrene derivatives units as constituents such as polystyrene, styrene/α-methyl styrene copolymer and styrene/α-methyl styrene/vinyl toluene copolymer, and particularly preferred is polystyrene.

The petroleum resin (C) includes aromatic petroleum resins (e.g. $C_9$ petroleum resin), aliphatic petroleum resins ($C_5$ petroleum resin) and aromatic-aliphatic copolymer petroleum resins ($C_9$ - $C_5$ copolymer resin). Of these petroleum resins, preferred are those having a number average molecular weight of less than 3000, particularly from 500 to 3000, and a softening point of from 80 to 150°C.

In the polyolefin hot-melt adhesives mentioned above, the proportion of the constituent (A) is from 1 to 60% by weight, particularly from 5 to 40% by weight, that of the constituent (B) is from 1 to 30% by weight, particularly from 5 to 20% by weight, and that of the constituent (C) is from 30 to 95% by weight, particularly from 50 to 90% by weight.

A process for preparing the first magnetooptical recording medium according to the present invention non illustrated.

The first magnetooptical recording medium may be prepared by depositing an enhancement film and a magnetooptical recording film having their predetermined compositions on a substrate by a known sputtering process or electron beam deposition process, wherein the substrate is maintained at about room temperature (the substrate may be either fixed to or may be rotated), and use is made of a composite target with chips of elements constituting the enhancement film and magnetooptical recording film in the predetermined proportions or an alloy target having the predetermined composition, and a reflection film is then formed on the thus formed magnetooptical recording film by a similar procedure.

The magnetooptical recording medium as illustrated above may be prepared at room temperature, and the magnetooptical recording film as formed is not always in need of a heat treatment such as annealing to ensure said film has an easy axis of magnetization perpendicular to the film.

If necessary, in this connection, an amorphous alloy film can also be formed on a substrate while heating the substrate to from 50 to 100°C or while cooling the substrate to -50°C.

At the time of sputtering, moreover, biasing a substrate is also possible so that the substrate has a negative potential. By doing so, ions of an inert gas such as argon accelerated in the electric field will hit not only target substances but also the magnetooptical recording film being formed and consequently a magnetooptical recording film having further enhanced characteristics may frequently be obtained.

A process for preparing the second and third magnetooptical recording media according to the invention is non illustrated.

The second and third magnetooptical recording media may be prepared by integrating together first and second magnetooptical recording media A and B prepared in the same manner as in the case of the first magnetooptical recording medium Ia, wherein the reflection films of said media A and B are bonded to each other by means of an adhesive layer 6. When a hot-melt adhesive is used as the adhesive layer 6, the hot-melt adhesive is applied on the reflection film of the first and/or the second magnetooptical recording medium, for example by a roll coater, and the first and second magnetooptical recording media are then compressed and laminated together, for example by a cold press apparatus.

In the first magnetooptical recording medium of the present invention, adhesion between the substrate and the enhancement film is excellent, and oxidation resistance and long-term stability of magnetooptical recording characteristics are also excellent.

In the second and third magnetooptical recording media of the invention, adhesion between the substrate and the enhancement film is excellent and accordingly oxidation resistance is excellent and, moreover no warpage occurs in the substrate. The magnetooptical recording media of the invention have excellent magnetooptical recording characteristics and long-term stability of the magnetooptical recording characteristics.

The present invention is non further illustrated in the following Examples.

Preparation Example 1

Preparation of substrate composed of a cycloolefin random copolymer composition

(i) Polymerization Example 1

Preparation of copolymer (A) having a softening temperature of not lower than 70°C.

With a 2-litre glass polymerization reactor equipped with a stirring blade, there was carried out continuously a copolymerization reaction between ethylene and 1,4,5,8-dimethano-1,2,3,4,4a,5,8,8a-octahydronaphthalene (structural formula:

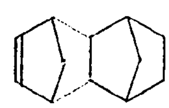

hereinafter abbreviated to DMON). That is, into the polymerization reactor were continuously charge a solution of DMON in cyclohexane so that the DMON concentration in the polymerization reactor became 60 g/l, a solution of $VO(OC_2H_5)Cl_2$ as a catalyst in cyclohexane so that the vanadium concentration in the polymerization reactor became 0.9 mmol/l, and a solution of ethylaluminium sesquichloride ($Al(C_2H_5)_{1.5}Cl_{1.5}$) in cyclohexane so that the aluminium concentration in the polymerization reactor became 7.2 mmol/l, while continuously withdrawing from the bottom of the polymerization reactor the polymerization liquid so that the volume of the polymerization liquid in the polymerization reactor was constantly 1 litre. Simultaneously, into the polymerization reactor from the top thereof ethylene was fed at a rate of 85 1/hr, hydrogen was fed at a rate of 6 1/hr and nitrogen was fed at a rate of 45 1/hr. The copolymerization reaction was carried out at 10°C by circulating a refridgerant through a jacket fitted externally to the polymerization reactor.

The copolymerization was carried out under the conditions as illustrated above, whereupon a polymerization reaction mixture containing an ethylene/DMON random copolymer was obtained. The polymerization reaction was stopped by adding a small amount of isopropyl alcohol to the polymerization liquid withdrawn from the bottom of the reactor. Thereafter, the polymerization liquid was poured into a household mixer containing acetone in about three times the volume of the polymerization liquid, while rotating the mixer, thereby depositing the resulting copolymer. The deposited copolymer was collected by filtration, dispersed in acetone so that the polymer concentration became about 50 g/l, and the copolymer was treated at the boiling point of acetone for 2 hours. After the above treatment, the copolymer was collected by filtration and dried at 120°C overnight (12 hours) under reduced pressure.

The thus obtained ethylene/DMON random copolymer (A) had an ethylene unit content of 59 mol% as measured by $^{13}C$-NMR analysis, an intrinsic viscosity [η] of 0.42 dl/g as measured at 135°C in decalin, and a softening temperature (TMA) of 154°C.

(ii) Polvmerization Example 2

Preparation of copolymer (B) having a softening temperature of below 70°C

The same copolymerization reaction as in Polymerization Example 1 was carried out except that DMON, $VO(OC_2H_5)Cl_2$ and ethylaluminium sesquichloride were fed into the polymerization reactor so that the concentrations of DMON, $VO(OC_2H_5)Cl_2$ and ethylaluminium sesquichloride in the polymerization reactor were 23 g/l, 0.7 mmol/l and 5.6 mmol/l, respectively, and that ethylene, hydrogen and nitrogen were fed into the polymerization reactor at rates of 140 l/hr, 13 l/hr and 25 l/hr, respectively, and the polymerization temperature was 10°C. After completion of the copolymerization, the resulting copolymer was deposited, collected and dried at 180°C under reduced pressure for 12 hours as in Polymerization Example 1.

The thus-obtained ethylene/DMON copolymer (B) had an ethylene unit of 89 mol% as measured by 13C-NMR analysis, an intrinsic viscosity [η] of 0.44 dl/g as measured at 135°C in decalin and a softening temperature (TMA) of 39°C.

(iii) Preparation of cycloolefin random copolymer composition

In 8 litres of cyclohexane were poured 400 g of the copolymer (A) obtained in Polymerization Example 1 and 4 g of the copolymer (B) obtained in Polymerization Example 2 (weight ratio: (A)/(B) = 100/1), and dissolved at about 50°C while thoroughly stirring to obtain a homogeneous solution. The thus obtained homogeneous solution was poured in 24 litres of acetone to deposit an (A)/(B) blend. The thus obtained blend was dried at 120°C under reduced pressure overnight.

The (A)/(B) blend thus obtained was incorporated with 0.5% of tetrakis-[methylene-3-(3,5-di-t-butyl-4-hydroxylphenyl) propionate] methane, 0.05% of zinc stearate and 0.5% of glycerin monostearate as stabilizers, each amount being based on the total weight of the copolymers (A) and (B). The resulting blend was pelletized at 23°C by using a 20 mmø extruder (L/D = 20) and molded into an optical disc substrate of 130 mmø and 1 mm in thickness.

Reference Example 1

The disc substrate (130 mmø) (hereinafter referred to as PO substrate) composed of the cycloolefin random copolymer composition obtained in Preparation Example 1 was subjected to ultrasonic washing with Fleon TE without drying and then used. On the disc substrate obtained, a film of $Si_3N_4$ having a thickness of 700 Å as an enhancement layer (protective layer) was formed, and then, using a composite target with chips of Pt and Tb in a predetermined proportion on a Fe-Co target, there was deposited on said enhancement layer by a magnetron sputtering process at from 20 to 50°C a magnetooptical recording film of $Pt_{12}Tb_{30}Fe_{49}Co_9$ having a thickness of 1000 Å as a magnetooptical recording layer under the conditions of an ultimate degree of vacuum of not more than $1.0 \times 10^{-7}$ Torr in an Ar atmosphere.

As a result of determination by the wide angle X-ray diffraction method, the magnetooptical recording film obtained was found to be amorphous. The composition of the film was determined by ICP emission spectroscopic analysis.

The thus obtained 130 mmø disc having the films was left to stand in an air-conditioning apparatus at 85°C and 85% RH for 170 hours. After this test, the appearance of the recording film was inspected microscopically. It was found that there was no change in the appearance of the recording film in comparison with the film before the test and that the adhesion of the film was good.

Reference Example 2

The procedure of Reference Example 1 was repeated except that a film of SiNx (0 < x < 4/3; reflectance n =2.3, k (attenuation coefficient) = 0.014) having a thickness of 700Å was formed as an enhancement layer in place of the film of $Si_3N_4$ to obtain an optical disc.

The thus obtained 130 mmø disc having the film was left to stand in an air-conditioning apparatus at 85°C and 85% RH for 170 hours. After this test, the appearance of the recording film was inspected microscopically. It was found that there was no change in the appearance of the recording film in comparison with the film before the test and that the adhesion of the film was good.

Reference Example 3

The procedure of Reference Example 1 was repeated except that a film of $Tb_{25}Fe_{68}Co_7$ having a thickness of 1000Å was formed as a magnetooptical recording layer in place of the film of $Pt_{12}Tb_{30}Fe_{49}Co_9$ to obtain an optical disc.

As a result of determination by the wide angle X-ray diffraction method, the magnetooptical recording film was found to be amorphous. The composition of the recording film was determined by ICP emission spectroscopic analysis.

The thus obtained 130mmø disc with the film was allowed to stand in an air-conditioning apparatus at 85°C and 85% RH for 170 hours. After this test, the appearance of the recording film was inspected microscopically. It was found that there was no change in the appearance of the recording film in comparison with the film before the test and that the adhesion of the film was good.

Reference Example 4

The procedure of Reference Example 2 was repeated except that a film of $Tb_{25}Fe_{68}Co_7$ having a thickness of 1000Å was formed as a magnetooptical recording layer in place of the film of $Pt_{12}Tb_{30}Fe_{49}Co_9$ to obtain an optical disc.

The thus obtained 130 mmø disc with the film was allowed to stand in an air-conditioning apparatus at 85°C and 85% RH for 170 hours. After this test, the appearance of the recording film was inspected microscopically. It was found that there was no change in the appearance of the recording film in comparison with the film before the test and that the adhesion of the film was good.

Comparative Example 1

A disc substrate composed of a polycarbonate resin (PC) was subjected to a drying treatment at 80°C in a sputtering device, evacuated overnight and then subjected to ultrasonic washing with Fleon TE. On the disc substrate obtained, a film of $Si_3N_4$ having a thickness of 700Å as a enhancement layer (protective layer) was formed, and then using a composite target with chips of Pt and Tb in a predetermined proportion on Fe-Co target as a target, there was deposited on said enhancement layer at from 20 to 50°C by a DC magnetron sputtering process a magnetooptical recording film comprising $Pt_{12}Tb_{30}Fe_{49}Co_9$ having a thickness of 1000Å as a magnetooptical recording layer under the condition of an ultimate degree of vacuum of not more than $1.0 \times 10^{-7}$ Torr in an Ar atmosphere.

As a result of determination by the wide angle X-ray diffraction method, the magnetooptical recording film was found to be amorphous. The composition of the recording film was determined by ICP emission spectroscopic analysis.

Comparative Example 2

The procedure of Comparative Example 1 was repeated except that a film of SiNx($0 < x < 4/3$, reflectance n = 2.3, k (attenuation coefficient) = 0.014) having a thickness of 700Å was formed as an enhancement layer in place of the film of $Si_3N_4$ to obtain an optical disc.

Comparative Example 3

The procedure of Comparative Example 1 was repeated except that a magnetooptical recording film of $Tb_{25}Fe_{68}Co_7$ having a thickness of 1000Å was formed as a magnetooptical recording layer in place of the film of $Pt_{12}Tb_{30}Fe_{49}Co_9$ to obtain an optical disc.

As a result of determination by the wide angle X-ray diffraction method, the magnetooptical recording film obtained was found to be amorphous. The composition of the recording film was determined by ICP emission spectroscopic analysis.

Comparative Example 4

The procedure of Comparative Example 2 was repeated except that a film of $Tb_{25}Fe_{68}Co_7$ having a thickness of 1000Å was formed as a magnetooptical recording layer in place of the film of $Pt_{12}Tb_{30}Fe_{49}Co_9$ to obtain an optical disc.

Evaluation of the adhesion between the substrate and the enhancement layer (enhancing layer)

The evaluation of the adhesion between the substrate and enhancement layer of each of the discs obtained in Reference Examples 1 to 4 and Comparative Examples 1 to 4 was made in the following manner.

The results are shown in Table 2.

Adhesion test

Cross-cut adhesive test (JIS-K5400)

On the recording layer as a sample, 11 parallel lines at right angles to each other are drawn at 1 mm intervals in length and width directions using a cutter knife. Cuts are made so as to give 100 squares per 1 $cm^3$ in the form of a checkerboard.

Evaluation on peeling is made by using Cellophane tape (a product of Nichiban).

Evaluation

(1) Immediately after the formation of the layer.
(2) After a lapse of 100 hours under conditions of 80°C and 85% RH.

Table 2

| | Substrate | Enhancement layer | Magnetooptical | Cross-cut adhesive test: Immediately after formation of layer | Cross-cut adhesive test: After 100 hr at 80°C/85% RH |
|---|---|---|---|---|---|
| Example 1 | PO | $Si_3N_4$ | $Pt_{12}Tb_{30}Fe_{49}Co_9$ | 100/100 Not peeled | 100/100 Not peeled |
| Comp.Ex.1 | PC | $Si_3N_4$ | $Pt_{12}Tb_{30}Fe_{49}Co_9$ | 0/100 Completely peeled off | 0/100 Completely peeled off |
| Example 2 | PO | SiNx | $Pt_{12}Tb_{30}Fe_{49}Co_9$ | 100/100 Not peeled | 100/100 Not peeled |
| Comp.Ex.2 | PC | SiNx | $Pt_{12}Tb_{30}Fe_{49}Co_9$ | 0/100 Completely peeled off | 0/100 Completely peeled off |
| Example 3 | PO | $Si_3N_4$ | $Tb_{25}Fe_{68}Co_7$ | 100/100 Not peeled | 100/100 Not peeled |
| Comp.Ex.3 | PC | $Si_3N_4$ | $Tb_{25}Fe_{68}Co_7$ | 0/100 Completely peeled off | 0/100 Completely peeled off |
| Example 4 | PO | SiNx | $Tb_{25}Fe_{68}Co_7$ | 100/100 Not peeled | 100/100 Not peeled |
| Comp.Ex.4 | PC | SiNx | $Tb_{25}Fe_{68}Co_7$ | 0/100 Completely peeled off | 0/100 Completely peeled off |

Examples 5 to 10 and Comparative Examples 5 to 14

On the (PO) disc substrate (130 mmø) of the cycloolefin type random copolymer composition prepared in Preparation Example 1, a disc substrate (130 mmø) of PMMA or a disc substrate (130 mmø) of PC, there were formed a film having a thickness of 500Å of a compound given in Table 3 as a protective layer (interlayer) by a sputtering process, a film comprising Tb-Fe having a thickness of 1000Å as a magnetooptical recording layer on said protective layer by sputtering process and then a film having a thickness of 500Å as a protective layer on said recording layer by sputtering process.

The magnetooptical recording media thus obtained were allowed to stand for 7 days at 70°C and 85% RH, and then subjected to a heat cycle test for 7 days wherein the media were allowed to stand alternately at -20°C for 2 hours and at +60°C for 2 hours to measure the coercive force (Hc).

The results are shown in Table 3.

## Table 3

| | Magnetooptical recording medium | | Change in Hc (KOe) | |
|---|---|---|---|---|
| | Sub-strate | Inter-layer | 70°C, 85% RH | Heat cycle |
| Example 5 | PO | $Si_3N_4$ | No change | No change |
| 6 | " | CdS | " | " |
| 7 | " | ZnSe | " | " |
| 8 | " | ZnS | " | " |
| 9 | " | Si | " | " |
| 10 | " | AlN | " | " |
| Comp.Ex.5 | " | ITO | Became horizontal magnetic film | |
| 6 | " | ZnO | " | |
| 7 | PMMA | $Si_3N_4$ | (Film peeling) Became horizontal magnetic film | |
| 8 | " | CdS | " | |
| 9 | " | ZnSe | " | |

Table 3(continued)

| | Magnetooptical recording medium | | Change in Hc (KOe) | |
|---|---|---|---|---|
| | Sub-strate | Inter-layer | 70°C, 85% RH | Heat cycle |
| Comp.Ex.10 | PC | $Si_3N_4$ | No change (film peeling) | |
| 11 | " | CdS | " | |
| 12 | " | ZnSe | " | |
| 13 | PO | SiO | Became horizontal magnetic film | |
| 14 | " | $SiO_2$ | " | |

As is clearly understood from the results, the magnetooptical recording media of the present invention maintain the initial coercive force stably, while the coercive force of the media having a different protective layer is greatly lowered even when the substrate thereof is the same as that of the media of the present invention. Further, when PMMA or PC is used as the substrate, the coercive force is lowered even when the protective layers are the same as those of the present invention.

Example 11

On a disc substrate composed of the cycloolefin random copolymer composition prepared in Preparation Example 1, there were successively formed a film of SiNx ($0 < x < 4/3$, reflectance n = 2.3, k (attenuation constant) = 0.014) having a thickness of 700Å as an enhancing layer, a film of $Pt_{18}Tb_{34}Fe_{38}Co_{10}$ as a magnetooptical recording layer and a film of $Ni_{80}Cr_{20}$ having a thickness of 700Å as a reflective layer.

Two magnetooptical discs thus obtained was coated on the reflective layer thereof with a hot-melt adhesive (consisting of 21% by weight of ethylene-propylene-1-butene terpolymer, 10% by weight of polystyrene having a Tg of 110°C and an MFR of 25 g/10 min and 69% by weight of petroleum resin having a number-average molecular weight of 1500) having a softening point of 145°C by means of a roll coater.

Two magnetooptical discs obtained in which each reflective layer was thin-coated with the hot-melt adhesive, were laminated onto each other in such a manner that the reflective layers were opposed to each other. The laminate was pressed by cold pressing device to obtain a double side-recording type magnetooptical recording medium.

The record reproducing characteristics of the thus-obtained double-sided magnetooptical recording medium were measured at a recording frequency of 1 MHz (duty ratio 50%) and a linear velocity of 5.4 m/sec. As a result, the optimum recording laser power was 3.5 mW and the C/N was 50 dB (reproducing laser power was 1.0 mW).

When the disc was allowed to stand under conditions of 80°C and 85% RH for 2000 hours, the value obtained by subtracting the C/N of the disc before this test from the C/N of the disc after this test, that is Δ C/N, was zero.

An environmental test under conditions of 80°C and 85% RH was also carried out. After 300 hours, appearance and warpage were evaluated. No change in the appearance of the medium was observed and the

warpage was 3.6.

Examples 12 to 17

The procedure of Example 11 was repeated except that the magnetooptical recording layer and the reflective layer were changed as shown in Table 7 to obtain double sided magnetooptical recording media. In the same manner as in Example 11, evaluations were made. The results are shown in Table 4.

Table 4

| | Magnetooptical recording layer | Reflective layer | Optimum recording power | C/N | ΔC/N | Appearance |
|---|---|---|---|---|---|---|
| Example 12 | $Pt_{15}Tb_{30}Fe_{49}Co_{8}$ 300Å | $Ni_{85}Cr_{15}$ 800Å | 4.0 mW | 50dB | 0dB | No change |
| Example 13 | $Pt_{8}Tb_{28}Fe_{53}Co_{11}$ 400Å | $Ni_{80}Cr_{20}$ 1200Å | 5.3 mW | 49dB | 0dB | No change |
| Example 14 | $Pt_{20}Tb_{35}Fe_{25}Co_{20}$ 200Å | $Ni_{64}Cu_{36}$ 200Å | 2.8 mW | 48dB | 0dB | No change |
| Example 15 | $Pd_{6}Pt_{6}Tb_{30}Fe_{48}Co_{10}$ 500Å | $Ni_{90}Cr_{10}$ 400Å | 3.8 mW | 48dB | 0dB | No change |
| Example 16 | $Pd_{15}Pt_{10}Tb_{36}Fe_{26}Co_{13}$ 250Å | $Ni_{80}Cr_{20}$ 1500Å | 6.2 mW | 49dB | 0dB | No change |
| Example 17 | $Pt_{7}Tb_{28}Fe_{54}Co_{11}$ 200Å | $Ni_{72}Cu_{28}$ 1800Å | 7.2 mW | 50dB | 0dB | No change |

Example 18

The procedure of Example 11 was repeated except that the cycloolefin type random copolymer (A) prepared in Polymerization Example (i) of Preparation Example 1 was used in place of the cycloolefin type random copolymer composition obtained in Referential Example 1 to prepare a double-sided magnetooptical recording medium.

In the same manner as in Example 11, the characteristics of the medium was evaluated (but, with regard to Δ C/N, the measurement of Δ C/N was made after allowing the medium to stand under conditions of 80°C and 85% RH for 1000 hours). The optimum power was 3.5 mW, the C/N was 50 dB, and after the lapse of 1000 hours, Δ C/N was 0 dB.).

**Claims**

1. A magnetooptical recording medium comprising a substrate, an enhancement film, a magnetooptical recording film and a reflection film in this order, wherein:
   the substrate is formed from a composition which comprises
   a cycloolefin random copolymer [A] of ethylene and a cycloolefin of the general formula [I],

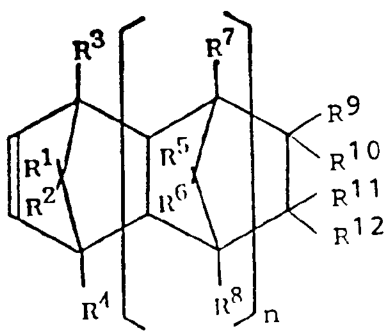

···[I]

   wherein n is 0 or a positive integer, $R^1$ to $R^{12}$, which may be the same or different, each represents a hydrogen atom, a halogen atom or a hydrocarbon group, provided that $R^9$ to $R^{12}$, when taken together, may form a mono- or poly-cyclic hydrocarbon ring which may optionally have a double bond or bonds, or $R^9$ and $R^{10}$ or $R^{11}$ and $R^{12}$, when taken together, may form an alkylidene group, said copolymer [A] having an intrinsic viscosity [η] of from 0.05 to 10 dl/g as measured at 135°C in decalin and a softening temperature (TMA) of at least 70°C, and
   a cycloolefin random copolymer [B] of ethylene and a cycloolefin of general formula [I], said copolymer [B] having an intrinsic viscosity [η] of from 0.05 to 5 dl/g as measured at 135°C in decalin and a softening temperature (TMA) of less than 70°C, the weight ratio of copolymer [A]: copolymer [B] being from 100/0.1 to 100/10;
   the enhancement film is composed of $Si_3N_4$, $SiN_x(0<x<4/3)$, AlN, ZnSe, ZnS,Si or CdS, and
   the reflection film is composed of a Ni-Cr alloy or a Ni-cu alloy containing Ni in an amount of 50-90 atom %.

2. A recording medium according to claim 1 wherein said magnetooptical recording film is a thin film of an amorphous alloy comprising (i) at least one 3d transition metal, and either or both of (ii) from 5 to 30 atom % of at least one corrosion resistant metal and (iii) at least one rare earth element, and has an easy axis of magnetization perpendicular to said film.

3. A recording medium according to claim 2 wherein said 3d transition metal (i) is Fe and/or Co.

4. A recording medium according to claim 2 or 3 wherein said corrosion resistant metal (ii) when present is at least one of Pt, Pd, Ti, Ta, Nb, Zr and Mo.

5. A recording medium according to claim 4 wherein said corrosion resistant metal (ii) is Pt and/or Pd.

6. A recording medium according to any one of claims 2 to 5 wherein said rare earth element (iii) when present

is at least one of Nb, Sm, Pr, Ce, Eu, Gd, Tb, Dy and Ho.

7. A recording medium according to any one of claims 2 to 6 wherein said amorphous alloy contains from 40 to 80 atom % of the 3d transition metal (i) and more than 10 but not more than 30 atom % of the corrosion resistant metal (ii).

8. A recording medium according to any one of the preceding claims wherein the reflection film comprises a nickel alloy.

9. A magnetooptical recording medium having a double-sided structure of first and second magnetooptical recording media wherein each of said first and second magnetooptical recording media comprises a substrate, an enhancement film, a recording film and a reflection film in this order, wherein said substructure is as defined in claim 1, and wherein the first magnetooptical recording medium is laminated to the second magnetooptical film through an adhesive film so that the reflection film of the first magnetooptical recording medium and that of the second magnetooptical recording medium face each other.

10. A recording medium according to claim 9 wherein said adhesive film is of a hot-melt adhesive.

11. A recording medium according to claim 9 or 10 wherein the first and second magnetooptical recording media are as defined in any one of claims 1 to 8.

12. A recording medium as defined in claim 9, 10 or 11 except that the composition from which each substrate is formed does not contain the copolymer [B].

## Patentansprüche

1. Magnetooptisches Aufzeichnungsmedium, umfassend ein Substrat, eine Verstärkungsfolie, eine magnetooptische Aufzeichnungsfolie und eine Reflexionsfolie in dieser Reihenfolge, wobei:
das Substrat gebildet ist aus einer Masse, umfassend
ein statistisches Cycloolefincopolymer [A] aus Ethylen und einem Cycloolefin der allgemeinen Formel [I],

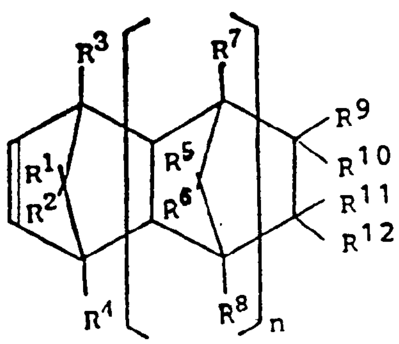

...[I]

wobei n 0 oder eine positive ganze Zahl ist, $R^1$ bis $R^{12}$, die gleich oder verschieden sein können, jeweils ein Wasserstoffatom, ein Halogenatom oder eine Kohlenwasserstoffgruppe bedeuten, mit der Maßgabe, daß $R^9$ bis $R^{12}$ zusammengenommen einen mono- oder polycyclischen Kohlenwasserstoffring bilden können, der gegebenenfalls eine Doppelbindung oder Doppelbindungen enthalten kann oder $R^9$ und $R^{10}$ oder $R^{11}$ und $R^{12}$ zusammengenommen eine Alkylidengruppe bilden können, wobei das Copolymer [A] eine Grenzviskosität [η] von 0,05 bis 10 dl/g, gemessen bei 135°C in Decalin und eine Erweichungstemperatur (TMA) von mindestens 70°C aufweist, und
ein statistisches Cycloolefincopolymer [B] aus Ethylen und einem Cycloolefin der allgemeinen Formel [I], wobei das Copolymer [B] eine Grenzviskosität [η] von 0,05 bis 5 dl/g, gemessen bei 135°C in Decalin, und einer Erweichungstemperatur (TMA) von weniger als 70°C besitzt, wobei das Gewichtsverhältnis von Copolymer [A] zu Copolymer [B] 100 : 0,1 bis 100 : 10 beträgt;
die Verstärkungsfolie besteht aus $Si_3N_4$, $SiN_x(0<x<4/3)$, AlN, ZnSe, ZnS, Si oder CdS; und

die Reflektionsfolie besteht aus einer Ni/Cr-Legierung oder einer Ni/Cu-Legierung, enthaltend Ni in einer Menge von 50-90 Atom %.

2. Aufzeichnungsmedium nach Anspruch 1, wobei die magnetooptische Aufzeichnungsfolie eine dünne Folie aus einer amorphen Legierung ist, umfassend (i) mindestens ein 3d Übergangsmetall und (ii) 5 bis 30 Atom % mindestens eines korrosionsbeständigen Metalls und/oder (iii) mindestens ein Seltene Erdenelement und mit einer Magnetisierungsachse (easy axis) senkrecht zu der Folie.

3. Aufzeichnungsmedium nach Anspruch 2, wobei das 3d Übergangsmetall (i) Fe und/oder Co ist.

4. Aufzeichnungsmedium nach Anspruch 2 oder 3, wobei das korrosionsbeständige Metall (ii), soweit vorhanden, Pt, Pd, Ti, Ta, Nb, Zr und/oder Mo ist.

5. Aufzeichnungsmedium nach Anspruch 4, wobei das korrosionsbeständige Metall (ii) Pt und/oder Pd ist.

6. Aufzeichnungsmedium nach einem der Ansprüche 2 bis 5, wobei das Seltene Erdelement (iii), soweit vorhanden, Nb, Sm, Pr, Ce, Eu, Gd, Tb, Dy und/oder Ho ist.

7. Aufzeichnungsmedium nach einem der Ansprüche 2 bis 6, wobei die amorphe Legierung 40 bis 80 Atom % des 3d Übergangsmetalls (i) und mehr als 10, aber nicht mehr als 30, Atom % des korrosionsbeständigen Metalls (ii) enthält.

8. Aufzeichnungsmedium nach einem der vorangehenden Ansprüche, wobei die Reflektionsfolie eine Nickellegierung umfaßt.

9. Magnetooptisches Aufzeichnungsmedium mit einer Doppelseitenstruktur aus einem ersten und zweiten magnetooptischen Aufzeichnungsmedium, wobei das erste und zweite magnetooptische Aufzeichnungsmedium jeweils umfassen ein Substrat, eine Verstärkungsfolie, eine Aufzeichnungsfolie und eine Reflektionsfolie in dieser Reihenfolge, wobei die Struktur wie in Anspruch 1 definiert ist und wobei das erste magnetooptische Aufzeichnungsmedium mit der zweiten magnetooptischen Folie über einen Klebefilm laminiert ist, so daß die Reflektionsfolie des ersten magnetooptischen Aufzeichnungsmediums und diejenige des zweiten magnetooptischen Aufzeichnungsmediums einander gegenüberliegen.

10. Aufzeichnungsmedium nach Anspruch 9, wobei der Klebefilm ein heiß schmelzendes Klebemittel ist.

11. Aufzeichnungsmedium nach Anspruch 9 oder 10, wobei das erste und zweite magnetooptische Aufzeichnungsmedium wie in einem der Ansprüche 1 bis 8 definiert sind.

12. Aufzeichnungsmedium nach Anspruch 9, 10 oder 11, mit der Ausnahme, daß die Masse, aus der jedes Substrat gebildet ist, das Copolymer [B] nicht enthält.

## Revendications

1. Support d'enregistrement magnéto-optique comportant, dans l'ordre, un substrat, un film de rehaussement, un film d'enregistrement magnéto-optique et un film réfléchissant, et dans lequel :

le substrat est formé d'une composition qui contient :

- un copolymère statistique [A] d'éthylène et d'une cyclo-oléfine de formule générale [I]

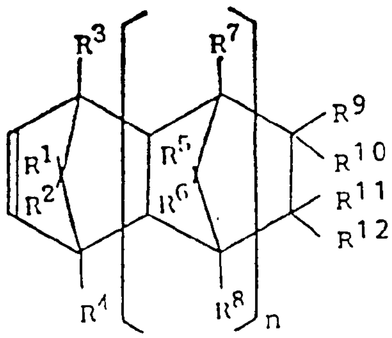

...[I]

dans laquelle n vaut 0 ou un nombre entier positif, les symboles $R^1$ à $R^{12}$, qui peuvent être identiques ou différents, représentent chacun un atome d'hydrogène, un atome d'halogène ou un groupe hydrocarboné, sous réserve que $R^9$ à $R^{12}$, considérés conjointement, puissent former un groupe hydrocarboné monocyclique ou polycyclique qui peut éventuellement comporter une ou plusieurs doubles liaisons, ou bien que $R^9$ et $R^{10}$, ou $R^{11}$ et $R^{12}$, considérés conjointement, puissent former un groupe alkylidène, ledit copolymère [A] présentant une viscosité intrinsèque [η] de 0,05 à 10 dl/g, mesurée à 135°C dans de la décaline, et une température de ramollissement (TMA) d'au moins 70°C, et

- un copolymère statistique [B] d'éthylène et d'une cyclo-oléfine de formule générale [I], ce copolymère [B] présentant une viscosité intrinsèque [η] de 0,05 à 5 dl/g, mesurée à 135°C dans de la décaline, et une température de ramollissement (TMA) inférieure à 70°C, le rapport pondéral du copolymère [A] au copolymère [B] valant de 100/0,1 à 100/10 ;

le film de rehaussement est constitué de $Si_3N_4$, $SiN_x$ ($0 < x < 4/3$), AlN, ZnSe, ZnS, Si ou CdS ; et le film réfléchissant est constitué d'un alliage Ni-Cr ou Ni-Cu contenant de 50 à 90 % de Ni, en nombre d'atomes.

2. Support d'enregistrement conforme à la revendication 1, dans lequel le film d'enregistrement magnéto-optique est un film mince d'un alliage amorphe comprenant (i) au moins un métal de transition 3d, et l'un ou l'autre des constituants suivants ou les deux, à savoir (ii) de 5 à 30 %, en nombre d'atomes, d'au moins un métal résistant à la corrosion, et (iii) au moins un élément des terres rares, et présente un axe de facile aimantation qui est perpendiculaire audit film.

3. Support d'enregistrement conforme à la revendication 2, dans lequel ledit métal de transition 3d (i) est Fe et/ou Co.

4. Support d'enregistrement conforme à la revendication 2 ou 3, dans lequel ledit métal (ii) résistant à la corrosion, lorsqu'il y en a, est au moins l'un des suivants : Pt, Pd, Ti, Ta, Nb, Zr et Mo.

5. Support d'enregistrement conforme à la revendication 4, dans lequel ledit métal (ii) résistant à la corrosion est Pt et/ou Pd.

6. Support d'enregistrement conforme à l'une des revendications 2 à 5, dans lequel ledit élément des terres rares (iii), lorsqu'il y en a, est au moins l'un des suivants : Nb, Sm, Pr, Ce, Eu, Gd, Tb, Dy et Ho.

7. Support d'enregistrement conforme à l'une des revendications 2 à 6, dans lequel ledit alliage amorphe contient de 40 à 80 %, en nombre d'atomes, du métal de transition 3d (i) et plus de 10 %, mais pas plus de 30 %, en nombre d'atomes, du métal (ii) résistant à la corrosion.

8. Support d'enregistrement conforme à l'une des revendications précédentes, dans lequel le film réfléchissant comporte un alliage de nickel.

9. Support d'enregistrement magnéto-optique possédant une structure à double face, constitué d'un premier et d'un second supports d'enregistrement magnéto-optique, dans lequel chacun desdits premier et second supports d'enregistrement magnéto-optique comporte, dans l'ordre indiqué, un substrat, un film de rehaussement, un film d'enregistrement et un film réfléchissant, celle sous-structure étant conforme à la revendication 1, et dans lequel le premier support d'enregistrement magnéto-optique est stratifié sur

le second support d'enregistrement magnéto-optique, à l'aide d'un film d'adhésif, de telle façon que le film réfléchissant du premier support d'enregistrement magnéto-optique et celui du second support d'enregistrement magnéto-optique se fassent face l'un à l'autre.

**10.** Support d'enregistrement conforme à la revendication 9, dans lequel ledit film d'adhésif est un film d'adhésif thermofusible.

**11.** Support d'enregistrement conforme à la revendication 9 ou 10, dans lequel les premier et second supports d'enregistrement magnéto-optique sont conformes à l'une des revendications 1 à 8.

**12.** Support d'enregistrement conforme à la revendication 9, 10 ou 11, sauf que la composition dont est formé chacun des substrats ne contient pas de copolymère [B].

FIG. 2

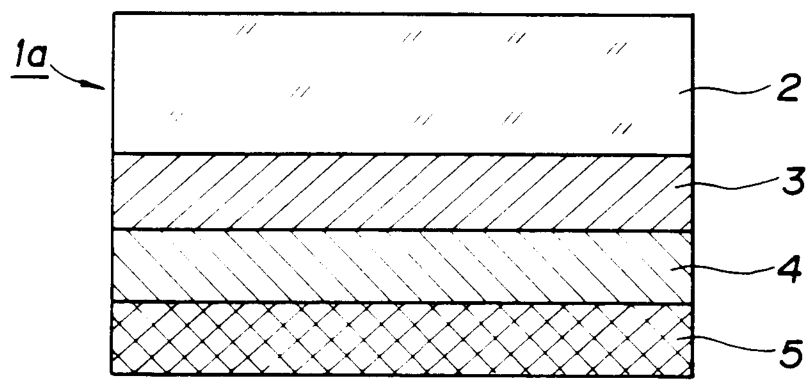

FIG. 3

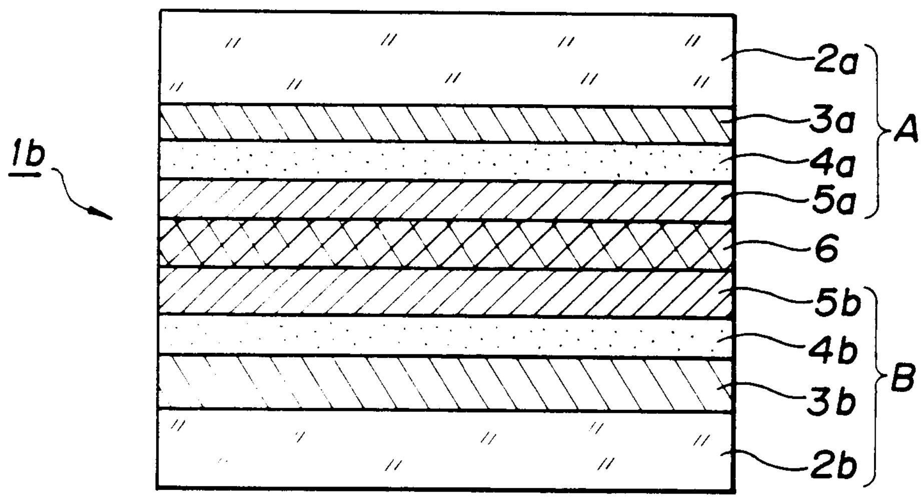
1b
2a
3a
4a
5a
6
5b
4b
3b
2b
A
B

FIG. 4

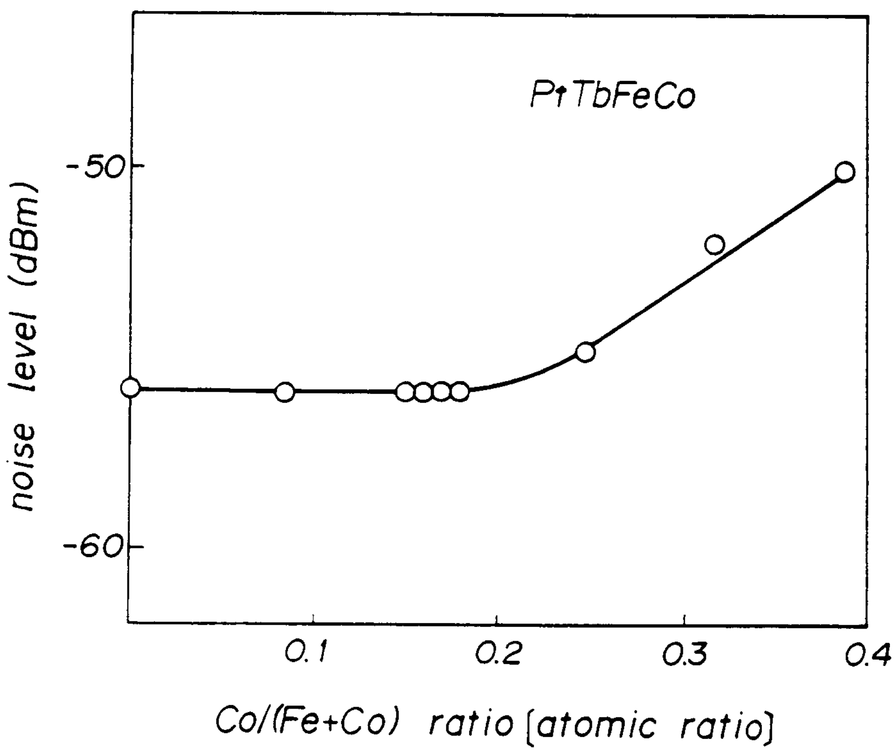
PtTbFeCo
-50
-60
noise level (dBm)
0.1
0.2
0.3
0.4
Co/(Fe+Co) ratio [atomic ratio]

# FIG. 5

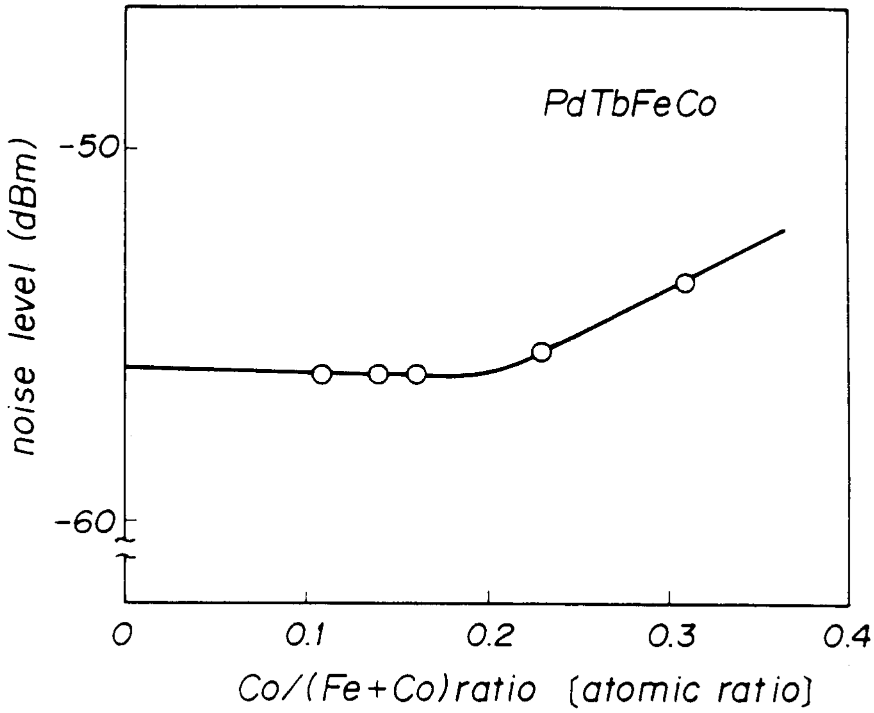
PdTbFeCo
-50
-60
noise level (dBm)
0
0.1
0.2
0.3
0.4
Co/(Fe+Co) ratio (atomic ratio)

# FIG. 6

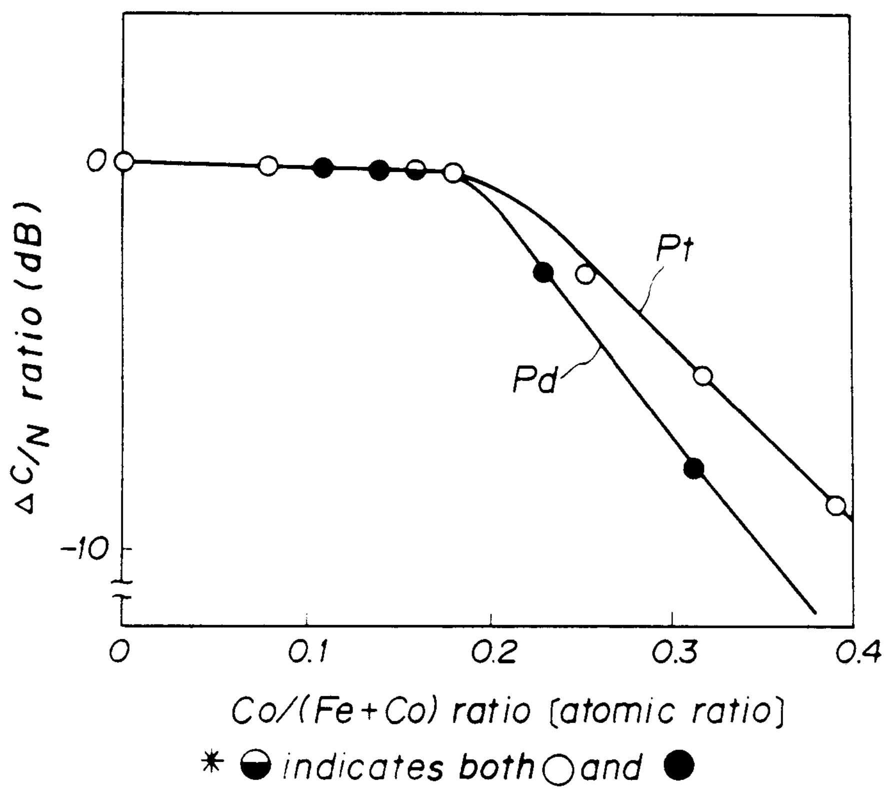
0
-10
ΔC/N ratio (dB)
Pt
Pd
0
0.1
0.2
0.3
0.4
Co/(Fe+Co) ratio (atomic ratio)
* ◒ indicates both ○ and ●

FIG. 7

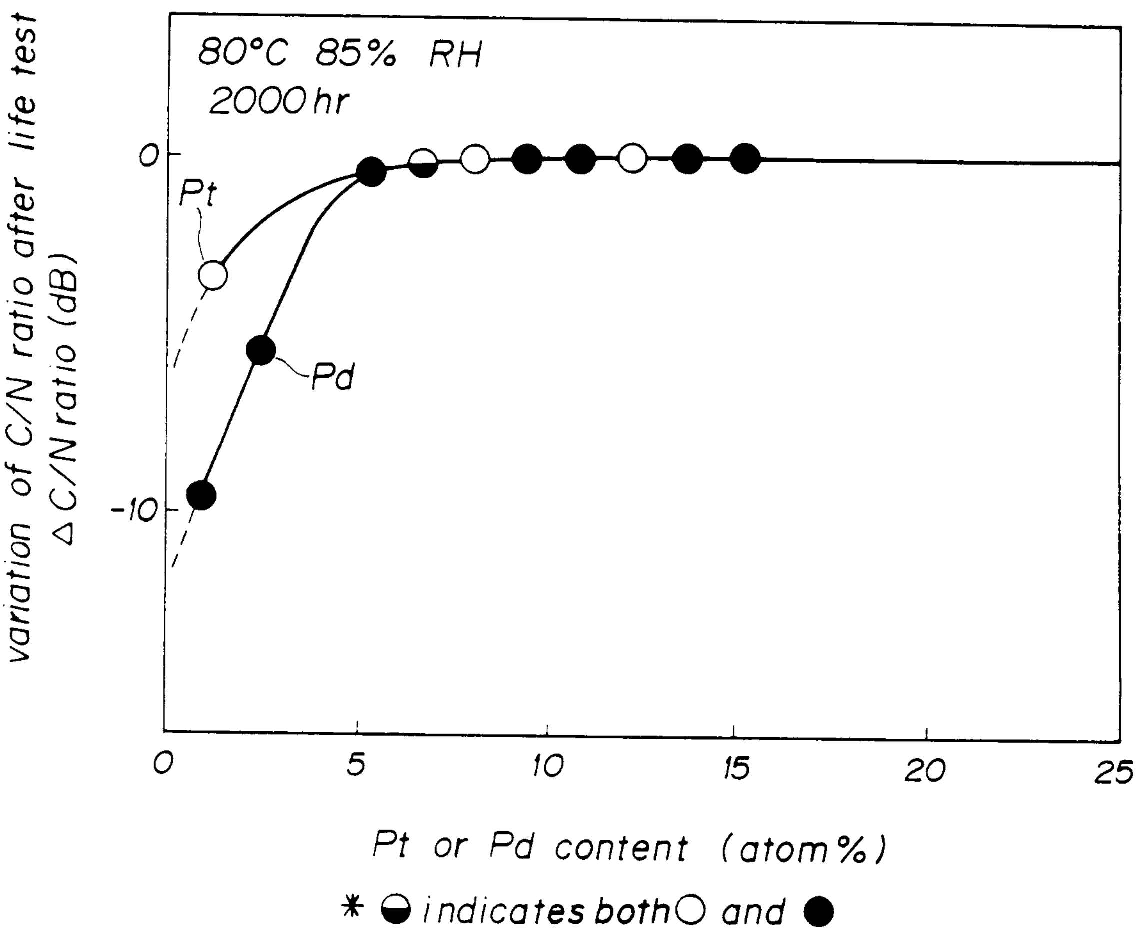
80°C 85% RH
2000hr
0
-10
Pt
Pd
0
5
10
15
20
25
variation of C/N ratio after life test
Δ C/N ratio (dB)
Pt or Pd content (atom%)
* ◒ indicates both ○ and ●

FIG. 8

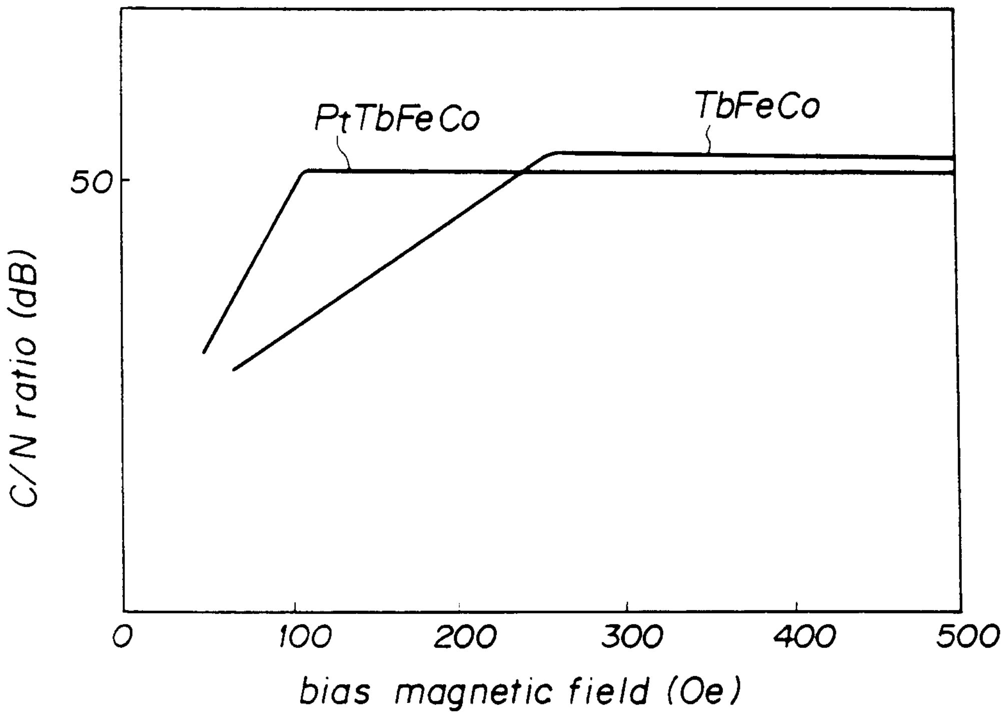
PtTbFeCo
TbFeCo
50
C/N ratio (dB)
0
100
200
300
400
500
bias magnetic field (Oe)

FIG. 9

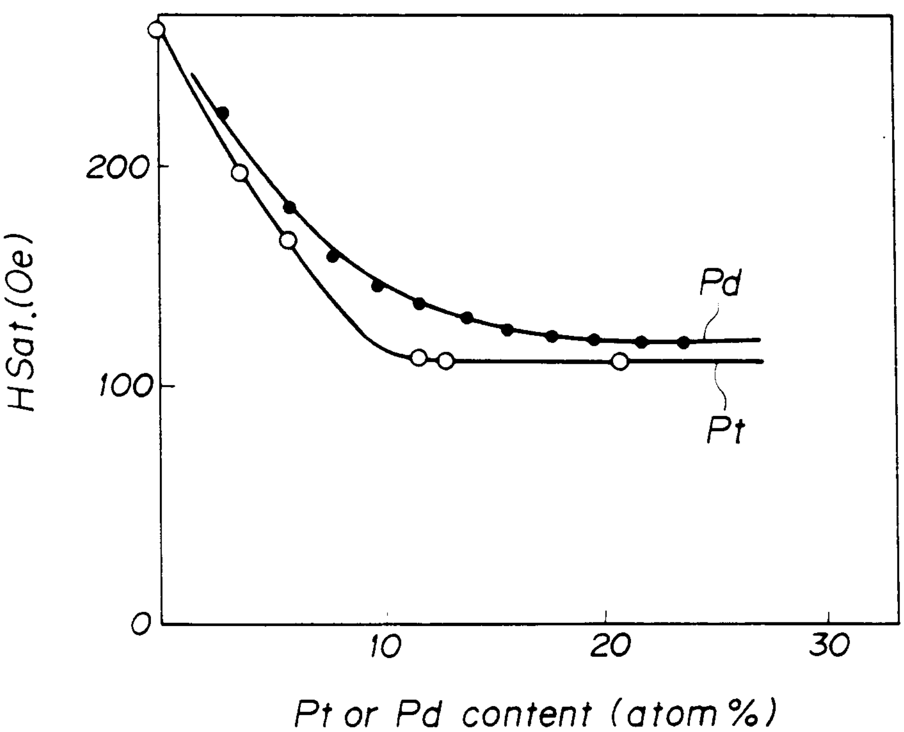
200
100
0
HSat.(Oe)
Pd
Pt
10
20
30
Pt or Pd content (atom %)